(19)

Europäisches Patentamt
European Patent Office
Office européen des brevets

(11) **EP 4 723 492 A1**

(12) **EUROPEAN PATENT APPLICATION**
published in accordance with Art. 153(4) EPC

(43) Date of publication:
**08.04.2026 Bulletin 2026/15**

(21) Application number: **24838651.8**

(22) Date of filing: **02.07.2024**

(51) International Patent Classification (IPC):
**H04B 1/719** (2011.01)

(52) Cooperative Patent Classification (CPC):
**H04B 1/717; H04B 1/7183; H04B 1/719**

(86) International application number:
**PCT/CN2024/103215**

(87) International publication number:
**WO 2025/011396 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.07.2023 CN 202310840919**

(71) Applicant: **Huawei Technologies Co., Ltd.
Shenzhen, Guangdong 518129 (CN)**

(72) Inventors:
• **QIAN, Bin
Shenzhen, Guangdong 518129 (CN)**

• **LIU, Chenchen
Shenzhen, Guangdong 518129 (CN)**
• **HUANG, Lei
Shenzhen, Guangdong 518129 (CN)**
• **YU, Qian
Shenzhen, Guangdong 518129 (CN)**
• **ZHOU, Zhengchun
Chengdu, Sichuan 611756 (CN)**
• **YANG, Xun
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **UWB-BASED PPDU TRANSMISSION METHODS AND APPARATUS**

(57) This application relates to a UWB-based PPDU transmission method and an apparatus. The method includes: A communication apparatus sends a PPDU, where the PPDU includes a first sequence, and the first sequence is any sequence shown in Table 3a, Table 3b, Table 4, Table 5a, or Table 5b. This application can be used to reduce interference between devices and support coexistence of a plurality of devices. This application is applied to a UWB-based WPAN system, a sensing system, and the like, supporting 802.15 series protocols, such as an 802.15.4ab standard or a next-generation 802.15.4ab standard; and may further be applied to a WLAN system supporting 802.11 series protocols, for example, a next-generation Wi-Fi protocol of 802.11ax, like 802.11be, Wi-Fi 7, or EHT, and for another example, a next-generation of 802.11be, Wi-Fi 8, UHR, or Wi-Fi AI.

FIG. 6

EP 4 723 492 A1

## Description

This application claims priority to Chinese Patent Application No. 202310840919.0, filed with the China National Intellectual Property Administration on July 7, 2023 and entitled "UWB-BASED PPDU TRANSMISSION METHOD AND APPARATUS", which is incorporated herein by reference in its entirety.

## TECHNICAL FIELD

This application relates to the field of communication technologies, and in particular, to an ultra-wideband (ultra-wideband, UWB)-based physical layer protocol data unit (physical layer protocol data unit, PPDU) transmission method and an apparatus.

## BACKGROUND

As ultra-wideband (ultra-wideband, UWB) enters the civilian field, ultra-wideband (UWB) wireless communication has become one of physical layer technologies for short-range and high-speed wireless networks. An ultra-wideband (UWB) technology is a wireless carrier communication technology that can perform data transmission, for example, by using nanosecond-level non-sinusoidal wave narrow pulses, and therefore, occupies a very wide spectrum range. Because of narrow pulses and low radiation spectral density of the UWB, the UWB has advantages such as a strong multi-path resolution capability, low power consumption, and high confidentiality.

The institute of electrical and electronics engineers (institute of electrical and electronics engineers, IEEE) has incorporated the UWB technology into IEEE 802 series wireless standards and has released a high-speed wireless personal area network (wireless personal area network, WPAN) standard IEEE 802.15.4a based on the UWB technology, and an evolved version IEEE 802.15.4z of IEEE 802.15.4a. A next-generation UWB wireless personal area network (WPAN) standard 802.15.4ab is under discussion. One of the key topics of 802.15.4ab is coexistence of a plurality of UWB devices, that is, a local device does not interfere with another device, and the another device does not interfere with normal use of the local device. Manners of suppressing interference are as follows: (1) Time orthogonality: Different users transmit and receive UWB signals at different moments, but time coordination cannot be implemented for devices that are not in a same network. (2) Frequency band orthogonality: Different users use different UWB channels, but currently, most UWB devices support limited channels, which are mainly a channel 5 and a channel 9. (3) Code orthogonality: Different users use different sequences, and interference is suppressed by reducing a cross-correlation result between sequences.

However, cross-correlation performance between sequences used in a current UWB system is poor, and interference cannot be effectively reduced.

## SUMMARY

Embodiments of this application provide a UWB-based PPDU transmission method and an apparatus, to reduce interference between devices and support coexistence of a plurality of devices.

The following describes this application from different aspects. It should be understood that the following implementations and beneficial effect of different aspects may be mutually referenced.

According to a first aspect, this application provides a UWB-based PPDU transmission method. The method is applied to a first communication apparatus, and the method includes: generating and sending a PPDU, where the PPDU includes a first sequence, and the first sequence is any sequence shown in Table 3a, Table 3b, Table 4, Table 5a, or Table 5b below.

For example, the first sequence in this application may be used to implement one or more of the following functions: time synchronization, sensing measurement, ranging, or device wakeup. For example, the first sequence may be carried in one or more of the following fields of the PPDU: a synchronization field, a wakeup (wakeup) field, a sensing field, or a ranging (ranging) field. A specific function of the first sequence is not limited in this application.

In some scenarios, an operation of generating the PPDU may be performed by another apparatus or device. The first communication apparatus may obtain the PPDU from the another apparatus or device, and then send the PPDU.

In this application, a sequence used in a UWB system is designed and used in a PPDU. The sequence (for example, the first sequence) has good autocorrelation performance and cross-correlation performance, and therefore can reduce interference between devices and support coexistence of a plurality of devices.

According to a second aspect, this application provides a UWB-based PPDU transmission method. The method is applied to a second communication apparatus, and the method includes: receiving a PPDU, where the PPDU includes a first sequence, and the first sequence is any sequence shown in Table 3a, Table 3b, Table 4, Table 5a, or Table 5b; and processing the received PPDU. For example, the second communication apparatus may process the received PPDU by using a locally pre-stored sequence, for example, perform a correlation operation, and then may perform a next operation based on a result of the correlation operation. If the sequence locally pre-stored by the second communication apparatus is the same as the first sequence, the second communication apparatus may perform an operation like time synchronization, ranging, sensing measurement, or device wakeup based on the result of the correlation operation.

According to a third aspect, this application provides a communication apparatus. The communication apparatus may be the first communication apparatus in the first aspect, or a chip, a functional module, or the like configured in the first communication apparatus, and the communication apparatus includes a processing unit and a transceiver unit. The processing unit is configured to generate a PPDU, where the PPDU includes a first sequence, and the first sequence is any sequence shown in Table 3a, Table 3b, Table 4, Table 5a, or Table 5b below. The transceiver unit is configured to send or output the PPDU.

According to a fourth aspect, this application provides a communication apparatus. The communication apparatus may be the second communication apparatus in the second aspect, or a chip, a functional module, or the like configured in the second communication apparatus, and the communication apparatus includes a processing unit and a transceiver unit. The transceiver unit is configured to receive or input a PPDU, where the PPDU includes a first sequence, and the first sequence is any sequence shown in Table 3a, Table 3b, Table 4, Table 5a, or Table 5b below. The processing unit is configured to process the PPDU.

In a possible implementation of any one of the foregoing aspects, an absolute value of a periodic autocorrelation maximum side lobe amplitude of the first sequence is less than or equal to 2. For example, when a carrier frequency offset (carrier frequency offset, CFO) is equal to 0, the absolute value of the periodic autocorrelation maximum side lobe amplitude of the first sequence is equal to any one of the following values: 0, 1, or 2.

In this application, the periodic autocorrelation maximum side lobe amplitude of the first sequence is constrained to be a small value, so that a receive end determines a position of a correlation peak based on the correlation operation, thereby obtaining better sensing, synchronization, and ranging performance, or the like.

In a possible implementation of any one of the foregoing aspects, a ratio of an autocorrelation main lobe amplitude of the first sequence to an autocorrelation maximum side lobe amplitude is greater than or equal to a first preset threshold. For example, the first preset threshold is 35 dB.

In a possible implementation of any one of the foregoing aspects, a length of the first sequence is any integer bit from 56 to 81 or from 106 to 162. For example, a spreading factor of the first sequence is 4 or 8; and when the spreading factor of the first sequence is 4, the length of the first sequence is any integer bit from 106 to 162; or when the spreading factor of the first sequence is 8, the length of the first sequence is any integer bit from 56 to 81. Therefore, duration of a symbol generated by performing spreading on the first sequence is about 1 $\mu$s, and meets a symbol duration requirement.

In a possible implementation of any one of the foregoing aspects, the first sequence is a binary sequence or a ternary sequence.

In a possible implementation of any one of the foregoing aspects, the first sequence is any sequence in a sequence set. For example, the sequence set may include one or more sequences in Table 3a, Table 3b, Table 4, Table 5a, or Table 5b below. Sequences in the sequence set have different lengths.

Optionally, a ratio of a maximum absolute value of an amplitude to an autocorrelation main lobe amplitude of one symbol corresponding to a second sequence is less than or equal to a second preset threshold, and the amplitude is obtained after cross-correlation results between a plurality of repeated symbols corresponding to the first sequence and the symbol corresponding to the second sequence in the sequence set are accumulated at a periodicity of a length of the symbol corresponding to the second sequence and then finally obtained results are averaged. The first sequence and the second sequence belong to the same sequence set, and the second sequence is any sequence other than the first sequence in the sequence set.

For example, the second preset threshold is -20 dB.

In this application, all sequences in the sequence set to which the first sequence belongs have different lengths, to reduce interference between the first sequence and another sequence and improve cross-correlation performance between sequences.

According to a fifth aspect, this application provides a UWB-based PPDU transmission method. The method is applied to a first communication apparatus, and the method includes: generating and sending a PPDU, where the PPDU includes a first sequence, an absolute value of a periodic autocorrelation maximum side lobe amplitude of the first sequence is less than or equal to 2, the first sequence is any sequence in a sequence set, and a length of the first sequence is different from a length of another sequence in the sequence set.

For example, the first sequence in this application may be used to implement one or more of the following functions: time synchronization, sensing measurement, ranging, or device wakeup. For example, the first sequence may be carried in one or more of the following fields of the PPDU: a synchronization field, a wakeup (wakeup) field, a sensing field, or a ranging (ranging) field. A specific function of the first sequence is not limited in this application.

In some scenarios, an operation of generating the PPDU may be performed by another apparatus or device. The first communication apparatus may obtain the PPDU from the another apparatus or device, and then send the PPDU.

In this application, the periodic autocorrelation maximum side lobe amplitude of the first sequence is constrained to be a small value, so that a receive end determines a position of a correlation peak based on the correlation operation, thereby obtaining better sensing, synchronization, and ranging performance, or the like. In addition, the length of the first sequence used in the PPDU is constrained to be different from the length of the another sequence in the sequence set, to reduce interference between the first sequence and the another sequence, improve cross-correlation performance between sequences, reduce interference between the devices, and support coexistence of a plurality of devices.

According to a sixth aspect, this application provides a UWB-based PPDU transmission method. The method is applied to a second communication apparatus, and the method includes: receiving a PPDU, where the PPDU includes a first sequence, an absolute value of a periodic autocorrelation maximum side lobe amplitude of the first sequence is less than or equal to 2, the first sequence is any sequence in a sequence set, and a length of the first sequence is different from a length of another sequence in the sequence set; and processing the received PPDU. For example, the second communication apparatus may process the received PPDU by using a locally pre-stored sequence, for example, perform a correlation operation, and then may perform a next operation based on a result of the correlation operation. If the sequence locally pre-stored by the second communication apparatus is the same as the first sequence, the second communication apparatus may perform an operation like time synchronization, ranging, sensing measurement, or device wakeup based on the result of the correlation operation.

According to a seventh aspect, this application provides a communication apparatus. The communication apparatus may be the first communication apparatus in the fifth aspect, or a chip, a functional module, or the like configured in the first communication apparatus, and the communication apparatus includes a processing unit and a transceiver unit. The processing unit is configured to generate a PPDU, where the PPDU includes a first sequence, an absolute value of a periodic autocorrelation maximum side lobe amplitude of the first sequence is less than or equal to 2, the first sequence is any sequence in a sequence set, and a length of the first sequence is different from a length of another sequence in the sequence set. The transceiver unit is configured to send or output the PPDU.

According to an eighth aspect, this application provides a communication apparatus. The communication apparatus may be the second communication apparatus in the sixth aspect, or a chip, a functional module, or the like configured in the second communication apparatus, and the communication apparatus includes a processing unit and a transceiver unit. The transceiver unit is configured to receive or input a PPDU, where the PPDU includes a first sequence, an absolute value of a periodic autocorrelation maximum side lobe amplitude of the first sequence is less than or equal to 2, the first sequence is any sequence in a sequence set, and a length of the first sequence is different from a length of another sequence in the sequence set. The processing unit is configured to process the PPDU.

With reference to any one of the fifth aspect to the eighth aspect, in a possible implementation, when a carrier frequency offset (carrier frequency offset, CFO) is equal to 0, the absolute value of the periodic autocorrelation maximum side lobe amplitude of the first sequence is equal to any one of the following values: 0, 1, or 2.

With reference to any one of the fifth aspect to the eighth aspect, in a possible implementation, a ratio of an autocorrelation main lobe amplitude of the first sequence to an autocorrelation maximum side lobe amplitude is greater than or equal to a first preset threshold. For example, the first preset threshold is 35 dB. In this way, performance of common ranging (without a scrambled timestamp sequence in the PPDU) can be close to performance of secure ranging (with the scrambled timestamp sequence in the PPDU).

With reference to any one of the fifth aspect to the eighth aspect, in a possible implementation, sequences in the sequence set have different lengths.

With reference to any one of the fifth aspect to the eighth aspect, in a possible implementation, a ratio of a maximum absolute value of an amplitude to an autocorrelation main lobe amplitude of one symbol corresponding to a second sequence is less than or equal to a second preset threshold, and the amplitude is obtained after cross-correlation results between a plurality of repeated symbols corresponding to the first sequence and the symbol corresponding to the second sequence in the sequence set are accumulated at a periodicity of a length of the symbol corresponding to the second sequence and then finally obtained results are averaged. The second sequence is any sequence other than the first sequence in the sequence set. For example, the second preset threshold is -20 dB.

For example, the sequence set may include one or more sequences in Table 3a, Table 3b, Table 4, Table 5a, and Table 5b below.

With reference to any one of the fifth aspect to the eighth aspect, in a possible implementation, a length of the first sequence is any integer bit from 56 to 81 or from 106 to 162. For example, a spreading factor of the first sequence is 4 or 8; and when the spreading factor of the first sequence is 4, the length of the first sequence is any integer bit from 106 to 162; or when the spreading factor of the first sequence is 8, the length of the first sequence is any integer bit from 56 to 81. Therefore, duration of a symbol generated by performing spreading on the first sequence is about 1 $\mu$s, and meets a symbol duration requirement.

With reference to any one of the fifth aspect to the eighth aspect, in a possible implementation, the first sequence is a binary sequence or a ternary sequence.

With reference to any one of the fifth aspect to the eighth aspect, in a possible implementation, the first sequence is any one of the following sequences:

| Length of a sequence | Specific sequence |
|---|---|
| 57 | 1 −1 1 −1 0 0 −1 0 −1 −1 −1 −1 1 1 1 −1 −1 0 −1 −1 −1 1 1 1 −1 −1 1 −1 1 −1 −1 −1 −1 −1 1 −1 0 1 −1 1 0 1 1 1 −1 1 1 0 −1 1 −1 −1 1 1 −1 −1 0 |
| 63 | 0 0 0 0 1 −1 −1 0 −1 0 0 0 −1 1 0 0 0 1 0 0 −1 0 1 1 0 0 0 0 0 0 1 0 0 0 0 0 −1 0 0 0 1 0 1 0 0 1 0 0 0 0 0 0 0 0 0 0 1 0 0 0 0 0 0 |
| 106 | 1 −1 −1 1 1 −1 1 1 −1 1 1 1 −1 −1 −1 −1 1 1 −1 1 −1 −1 −1 −1 1 1 −1 −1 1 1 −1 1 −1 −1 −1 1 1 1 1 1 1 1 1 1 1 1 1 1 −1 −1 −1 −1 −1 1 1 1 1 −1 1 −1 1 1 −1 1 −1 1 −1 1 −1 1 −1 1 −1 −1 1 −1 −1 −1 −1 1 1 −1 −1 1 1 −1 1 −1 −1 −1 −1 1 1 −1 1 −1 −1 1 −1 −1 −1 1 1 1 −1 −1 1 |
| 112 | 1 1 −1 1 1 1 1 1 1 1 1 1 −1 1 −1 −1 1 −1 −1 1 1 −1 1 −1 −1 1 −1 1 1 1 −1 −1 −1 1 −1 −1 1 1 −1 1 −1 −1 −1 1 1 1 1 1 −1 1 1 −1 −1 −1 1 −1 −1 −1 −1 1 −1 1 1 1 1 −1 1 1 −1 −1 −1 1 −1 1 −1 −1 1 −1 −1 −1 1 1 −1 −1 −1 1 −1 −1 1 −1 −1 −1 −1 1 1 1 1 −1 −1 1 1 1 −1 −1 −1 −1 1 −1 1 −1 1 −1 1 −1 −1 −1 |
| 114 | −1 0 0 0 −1 0 −1 0 −1 0 1 0 −1 0 −1 0 −1 0 1 0 1 0 0 0 −1 0 −1 0 1 0 −1 0 −1 0 1 0 −1 0 1 0 1 0 −1 0 1 0 −1 0 1 0 1 0 −1 0 −1 0 −1 0 0 0 −1 0 1 0 0 0 1 0 −1 0 −1 0 −1 0 1 0 1 0 1 0 1 0 1 0 1 0 1 0 0 0 −1 0 1 0 −1 0 −1 0 −1 0 1 0 −1 0 0 0 0 0 −1 0 −1 0 1 0 0 0 |
| 120 | 1 −1 −1 1 −1 −1 −1 1 −1 −1 −1 −1 1 −1 −1 1 −1 1 |

(continued)

| Length of a sequence | Specific sequence |
|---|---|
|  | 1 −1 1 1 −1 −1 1 1 1 1 1 1 −1 1 −1 1 −1<br>1 1 −1 1 −1 1 −1 1 −1 −1 1 1 −1 1 1 −1 1<br>1 −1 −1 −1 −1 1 1 1 1 −1 1 −1 −1 1 −1 1 1<br>−1 −1 −1 1 1 1 −1 −1 1 1 1 1 1 1 1 1 −1<br>−1 −1 −1 −1 −1 −1 1 −1 1 −1 1 1 −1 −1 1 1 1<br>−1 −1 −1 −1 1 1 1 −1 1 −1 −1 −1 1 −1 −1 −1 1 |
| 121 | 0 1 −1 −1 0 0 −1 0 0 0 1 −1 −1 1 0 1 0 0<br>1 −1 0 1 −1 1 0 1 −1 0 −1 −1 0 0 1 0 1<br>0 1 1 1 0 1 0 −1 1 0 0 1 1 0 −1 −1 1<br>−1 0 1 1 1 1 1 −1 −1 1 1 1 −1 0 1 0 1<br>−1 1 −1 1 0 0 −1 1 −1 −1 −1 −1 0 1 0 −1 −1<br>0 −1 1 1 1 0 0 0 0 1 0 −1 0 0 1 1 1<br>−1 1 1 −1 1 −1 −1 0 −1 −1 1 0 0 0 1 1 −1<br>−1 |
| 124 | 1 1 1 1 0 1 0 0 1 −1 1 −1 0 1 −1 −1 −1 1<br>1 −1 1 1 −1 1 0 −1 −1 −1 0 −1 −1 −1 1 1 −1<br>0 1 0 0 −1 −1 1 1 0 1 −1 1 1 1 1 1 −1<br>1 −1 −1 0 −1 −1 1 0 −1 −1 1 −1 1 −1 0 −1 0<br>0 1 1 1 1 0 −1 −1 1 −1 −1 1 1 1 −1 −1 −1<br>0 1 −1 1 0 1 −1 1 1 −1 −1 0 1 0 0 1 −1<br>−1 1 0 1 1 1 −1 1 −1 1 1 1 1 −1 0 −1 1<br>1 0 −1 1 |
| 126 | 1 1 −1 −1 1 1 −1 −1 −1 −1 1 −1 1 −1 −1 −1 1 1<br>−1 1 1 −1 1 1 −1 1 −1 1 1 −1 −1 1 −1 1 1<br>−1 1 1 1 1 −1 1 −1 1 −1 −1 1 1 1 1 1 1<br>1 1 −1 −1 1 −1 −1 −1 −1 1 −1 1 −1 −1 −1 1 −1<br>1 1 1 −1 −1 1 −1 1 −1 1 −1 1 1 −1 −1 −1 −1<br>−1 −1 1 −1 1 1 1 −1 −1 −1 −1 1 1 −1 −1 −1 −1<br>−1 1 1 1 −1 −1 −1 1 1 −1 1 1 1 1 1 −1 1<br>−1 −1 1 1 −1 −1 |

(continued)

| Length of a sequence | Specific sequence |
|---|---|
| 127 | −1 1 1 1 1 1 1 −1 −1 1 −1 −1 −1 −1 −1 1 1 1<br>1 1 −1 1 −1 −1 1 1 1 1 −1 1 1 1 1 −1 −1<br>−1 1 −1 1 1 1 −1 −1 1 1 1 −1 1 1 −1 −1 −1 |
|  | 1 1 −1 1 −1 1 1 −1 −1 1 −1 1 1 −1 1 −1 −1<br>−1 −1 1 −1 1 −1 −1 −1 1 −1 −1 −1 1 1 1 −1 −1<br>−1 −1 1 1 −1 −1 1 1 −1 1 1 −1 1 1 1 −1 1<br>−1 1 −1 1 −1 −1 1 −1 −1 1 1 −1 −1 −1 −1 −1 −1<br>−1 1 −1 −1 1 −1 1 |
| 130 | −1 1 1 1 −1 1 1 1 −1 −1 1 1 1 −1 −1 −1 −1 −1<br>−1 1 1 1 −1 −1 −1 −1 −1 1 −1 −1 1 1 −1 −1 −1<br>1 1 1 −1 1 −1 1 1 −1 1 −1 −1 1 1 1 1 −1<br>1 1 1 −1 1 −1 1 1 1 1 −1 1 −1 1 −1 −1 −1<br>−1 1 −1 1 1 1 1 1 −1 1 1 1 −1 1 −1 −1 1<br>1 1 1 −1 −1 −1 −1 −1 1 −1 −1 1 −1 −1 1 1 −1<br>−1 −1 1 −1 1 −1 −1 1 −1 −1 1 −1 1 −1 1 1 −1<br>1 1 −1 −1 1 −1 −1 −1 1 −1 |
| 131 | −1 1 −1 −1 −1 1 −1 1 −1 1 −1 −1 −1 1 −1 −1 1 1<br>1 −1 −1 1 1 1 −1 1 −1 −1 1 1 1 1 −1 −1 −1<br>−1 1 −1 −1 1 −1 1 −1 −1 −1 −1 1 −1 −1 1 1 −1<br>−1 1 −1 1 1 −1 −1 −1 −1 −1 −1 −1 −1 1 1 1 1<br>1 1 1 1 −1 −1 1 −1 1 1 −1 −1 1 1 −1 1 1<br>1 1 −1 1 −1 1 1 −1 1 1 1 1 1 −1 −1 −1 −1 1<br>1 −1 1 −1 −1 −1 1 1 −1 −1 −1 1 1 −1 1 1 1<br>−1 1 −1 1 −1 1 1 1 1 −1 1 1 |

| Length of a sequence | Specific sequence |
|---|---|
| 133 | −1 −1 1 0 −1 −1 0 0 −1 −1 −1 −1 1 0 −1 1 −1 −1 <br> 1 −1 −1 1 1 −1 1 −1 −1 1 −1 1 −1 −1 1 −1 1 <br> 1 1 1 1 −1 −1 0 1 0 −1 −1 1 1 1 −1 −1 −1 <br> −1 1 −1 1 0 1 1 1 1 1 −1 1 −1 1 1 −1 1 <br> −1 1 −1 0 −1 1 −1 −1 1 1 −1 −1 1 −1 −1 1 1 <br> 1 −1 −1 −1 1 −1 −1 1 1 0 −1 1 −1 −1 −1 −1 −1 <br> −1 −1 −1 −1 1 1 −1 −1 1 1 1 0 1 −1 −1 −1 0 <br> −1 1 1 1 −1 1 −1 1 0 1 1 −1 −1 |
| 136 | 1 1 −1 1 −1 1 −1 1 1 1 −1 1 1 −1 −1 1 −1 1 <br> −1 −1 −1 −1 1 1 −1 1 −1 1 1 −1 1 1 1 −1 1 <br> −1 −1 1 1 −1 1 1 1 1 1 −1 −1 −1 −1 1 −1 −1 <br> 1 −1 −1 1 1 1 1 1 1 1 −1 −1 −1 1 1 −1 1 |
| | 1 1 −1 −1 1 −1 −1 1 −1 1 −1 1 −1 −1 1 1 1 <br> −1 −1 −1 1 −1 1 1 −1 1 −1 1 1 1 −1 −1 1 1 <br> 1 1 −1 1 1 1 −1 −1 −1 −1 −1 1 1 −1 1 −1 −1 <br> −1 −1 −1 1 1 −1 −1 −1 1 −1 −1 −1 −1 −1 −1 −1 |
| 138 | −1 −1 1 1 −1 −1 1 1 1 1 1 −1 1 1 1 −1 −1 −1 <br> −1 1 1 −1 −1 −1 −1 −1 −1 1 1 −1 1 1 1 1 −1 <br> 1 −1 −1 −1 1 −1 1 1 1 1 1 −1 1 1 −1 −1 −1 <br> 1 1 1 1 −1 1 1 −1 1 1 −1 1 −1 −1 −1 −1 −1 <br> 1 −1 1 −1 1 −1 −1 −1 −1 1 1 1 −1 −1 −1 1 −1 <br> 1 1 −1 1 1 −1 −1 −1 1 −1 1 −1 −1 −1 −1 1 −1 <br> −1 −1 −1 1 −1 1 1 1 −1 −1 1 −1 1 −1 1 1 −1 <br> −1 1 −1 1 1 −1 1 1 1 −1 1 −1 1 1 −1 −1 1 <br> 1 |

(continued)

| Length of a sequence | Specific sequence |
|---|---|
| 139 | −1 1 1 −1 −1 −1 −1 1 −1 1 −1 1 −1 1 1 −1 1 1<br>1 −1 1 1 1 −1 −1 1 1 −1 −1 −1 −1 1 1 −1 −1<br>−1 −1 −1 1 1 −1 −1 1 −1 −1 −1 −1 1 −1 1 −1 −1<br>1 −1 −1 1 −1 1 1 1 1 1 −1 −1 −1 −1 −1 1 −1<br>1 −1 1 1 1 1 1 −1 −1 −1 −1 −1 1 −1 1 1 −1<br>1 1 −1 1 −1 1 1 1 1 −1 1 1 −1 −1 1 1 1<br>1 1 −1 −1 1 1 1 1 −1 −1 1 1 −1 −1 −1 1 −1<br>−1 −1 1 −1 −1 1 −1 1 −1 1 −1 1 1 1 1 −1 −1<br>1 1 |
| 143 | −1 −1 −1 −1 −1 1 −1 −1 −1 −1 1 1 −1 −1 −1 1 −1 1<br>−1 −1 1 −1 1 −1 −1 −1 −1 −1 −1 1 1 1 −1 1 1<br>1 −1 1 −1 −1 1 −1 −1 1 1 1 −1 1 −1 −1 −1 1<br>−1 −1 −1 1 −1 −1 1 1 1 1 1 −1 −1 −1 1 1 1<br>−1 1 1 −1 −1 1 −1 −1 1 −1 1 1 −1 −1 −1 −1 −1<br>1 1 1 1 1 −1 −1 1 1 1 −1 1 −1 1 −1 1 1<br>−1 −1 1 −1 1 −1 −1 1 1 −1 −1 −1 1 1 −1 1 1<br>1 1 1 −1 1 1 −1 1 −1 1 −1 1 1 −1 1 1 1<br>1 −1 1 1 1 1 |
| 148 | −1 −1 1 1 1 1 −1 1 −1 −1 −1 1 −1 −1 1 −1 −1 1<br>1 1 1 1 1 −1 −1 1 −1 1 1 1 1 1 1 1 −1<br>−1 −1 −1 −1 1 1 1 −1 1 1 1 1 −1 −1 1 1 1<br>1 −1 −1 1 −1 −1 1 1 1 −1 −1 −1 1 −1 −1 −1 1<br>−1 −1 −1 −1 −1 1 1 −1 1 −1 1 1 1 −1 1 1 1<br>−1 1 1 −1 1 1 −1 −1 −1 1 1 −1 1 −1 −1 1 1<br>−1 1 −1 −1 −1 1 −1 −1 1 −1 1 −1 −1 1 −1 1 −1<br>1 −1 −1 −1 −1 1 1 −1 1 −1 1 −1 −1 1 1 1 −1<br>−1 −1 1 −1 −1 −1 −1 1 −1 1 1 |

(continued)

| Length of a sequence | Specific sequence |
|---|---|
| 151 | −1 −1 1 −1 −1 1 1 −1 −1 −1 −1 1 1 1 1 −1 −1 −1<br>−1 −1 −1 −1 1 1 −1 1 1 1 −1 1 −1 −1 1 −1 1<br>−1 −1 −1 −1 −1 1 −1 −1 −1 −1 1 −1 1 −1 −1 1 1<br>1 1 −1 1 1 −1 −1 1 1 −1 1 −1 1 1 1 −1 −1<br>1 1 −1 1 −1 1 −1 1 −1 1 −1 −1 1 1 −1 −1 −1<br>1 −1 1 −1 −1 1 1 −1 −1 1 −1 −1 −1 −1 1 1 −1<br>1 −1 1 1 1 1 −1 1 1 1 1 1 −1 1 −1 1 1<br>−1 1 −1 −1 −1 1 −1 −1 1 1 1 1 1 1 1 −1 −1<br>−1 −1 1 1 1 1 −1 −1 1 1 −1 1 1 1 |
| 156 | −1 −1 −1 1 −1 1 −1 −1 1 1 −1 1 −1 −1 1 −1 1 −1<br>−1 −1 −1 1 1 −1 −1 1 1 −1 1 1 −1 1 −1 −1 1<br>1 1 1 1 1 −1 1 −1 −1 −1 −1 −1 −1 1 1 1 −1<br>1 −1 1 −1 1 −1 −1 −1 1 −1 −1 1 1 1 −1 −1 1<br>−1 −1 1 1 −1 1 −1 −1 −1 1 1 −1 1 1 1 1 −1<br>−1 1 1 1 −1 −1 1 −1 −1 1 1 1 −1 1 1 1 1<br>1 1 1 1 −1 1 1 −1 1 −1 1 −1 −1 −1 −1 1 −1<br>1 −1 1 1 −1 −1 −1 −1 1 1 1 −1 −1 1 1 −1 −1<br>1 −1 1 1 1 1 1 −1 −1 −1 −1 1 1 −1 −1 −1 −1<br>−1 1 |
| 162 | −1 −1 −1 1 −1 1 1 −1 −1 1 1 1 1 1 1 1 −1 1<br>1 1 1 1 1 1 −1 −1 1 −1 −1 1 1 1 −1 1 −1<br>−1 1 1 −1 1 1 −1 −1 −1 1 1 1 −1 −1 −1 −1 1<br>−1 1 −1 1 1 −1 1 1 −1 −1 1 1 1 1 −1 1 −1<br>−1 −1 −1 −1 −1 1 −1 1 1 1 −1 −1 1 −1 1 1 −1<br>1 1 1 1 −1 1 −1 1 −1 −1 −1 −1 1 −1 1 1 −1<br>−1 1 1 1 −1 −1 −1 −1 −1 −1 1 −1 1 1 −1 1 1<br>−1 1 1 −1 −1 −1 1 1 −1 −1 −1 −1 1 −1 −1 1 1<br>1 −1 −1 1 −1 1 −1 1 −1 −1 −1 1 −1 1 −1 1 −1<br>−1 1 1 −1 −1 −1 −1 1 |

According to a ninth aspect, this application provides a communication apparatus. The communication apparatus includes a processor, configured to perform the method according to any one of the first aspect, the second aspect, the fifth aspect, the sixth aspect, or the possible implementations of the aspects. Alternatively, the processor is configured to execute a program stored in a memory. When the program is executed, the method according to any one of the first aspect, the second aspect, the fifth aspect, the sixth aspect, or the possible implementations of the aspects is performed.

With reference to the ninth aspect, in a possible implementation, the memory is located outside the communication apparatus.

With reference to the ninth aspect, in a possible implementation, the memory is located inside the communication apparatus.

In this application, the processor and the memory may alternatively be integrated into one component. In other words, the processor and the memory may alternatively be integrated together.

With reference to the ninth aspect, in a possible implementation, the communication apparatus further includes a transceiver, and the transceiver is configured to send or receive a PPDU.

According to a tenth aspect, an embodiment of this application provides a communication apparatus. The communication apparatus may be implemented in a form of a chip, or may be implemented in a form of a device. This is not limited in this application. The communication apparatus includes a logic circuit and an interface, and the logic circuit is coupled to the interface. The interface is configured to input and/or output a PPDU, and the logic circuit is configured to perform the method according to any one of the first aspect, the second aspect, the fifth aspect, the sixth aspect, or the possible implementations of the aspects.

According to an eleventh aspect, this application provides a readable storage medium. The readable storage medium stores program instructions, and when the program instructions are run on a computer, the computer is enabled to perform the method according to any one of the first aspect, the second aspect, the fifth aspect, the sixth aspect, or the possible implementations of the aspects.

According to a twelfth aspect, this application provides a program product including program instructions. When the program product runs, the method according to any one of the first aspect, the second aspect, the fifth aspect, the sixth aspect, or the possible implementations of the aspects is performed.

According to a thirteenth aspect, this application provides a wireless communication system. The wireless communication system includes a first communication apparatus and a second communication apparatus. The first communication apparatus is configured to perform the method according to any one of the first aspect, the fifth aspect, or the possible implementations of the aspects, and the second communication apparatus is configured to perform the method according to any one of the second aspect, the sixth aspect, or the possible implementations of the aspects.

For technical effect achieved in the foregoing aspects, refer to each other or refer to beneficial effect in the method embodiment described below. Details are not repeated herein.

## BRIEF DESCRIPTION OF DRAWINGS

To describe technical solutions in embodiments of this application more clearly, the following briefly describes accompanying drawings for describing embodiments.

FIG. 1 is a diagram of a structure of a wireless communication system according to an embodiment of this application;

FIG. 2 is a diagram of another structure of a wireless communication system according to an embodiment of this application;

FIG. 3 is a diagram of PPDU structures in UWB systems according to an embodiment of this application;

FIG. 4 is a diagram of a structure of a symbol included in a SYNC field according to an embodiment of this application;

FIG. 5 is a diagram of autocorrelation simulation results of an Ipatov sequence according to an embodiment of this application;

FIG. 6 is a schematic flowchart of a UWB-based PPDU transmission method according to an embodiment of this application;

FIG. 7 is diagrams of calculating channel impulse responses according to an embodiment of this application;

FIG. 8a is a diagram of simulation of autocorrelation results in a case in which a local symbol is the same as a received symbol according to an embodiment of this application;

FIG. 8b is a diagram of simulation of a channel impulse response in a case in which a local symbol is the same as a received symbol according to an embodiment of this application;

FIG. 9a is a diagram of simulation of cross-correlation results in a case in which a local symbol is different from a received symbol according to an embodiment of this application;

FIG. 9b is a diagram of simulation of a channel impulse response in a case in which a local symbol is different from a received symbol according to an embodiment of this application;

FIG. 10a is a diagram of simulation of autocorrelation results according to an embodiment of this application;

FIG. 10b is a diagram of simulation of a channel impulse response according to an embodiment of this application;

FIG. 11a is a diagram of simulation of cross-correlation results according to an embodiment of this application;

FIG. 11b is a diagram of another simulation of a channel impulse response according to an embodiment of this application;

FIG. 12 is a diagram of a structure of a communication apparatus according to an embodiment of this application;

FIG. 13 is a diagram of another structure of a communication apparatus according to an embodiment of this application; and

FIG. 14 is a diagram of still another structure of a communication apparatus according to an embodiment of this application.

## DESCRIPTION OF EMBODIMENTS

The following clearly and completely describes technical solutions in embodiments of this application with reference to accompanying drawings in embodiments of this application.

In the descriptions of this application, words such as "first" and "second" are merely used to distinguish between different objects, and do not limit quantities and execution sequences. In addition, the words such as "first" and "second" do not indicate a definite difference. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In the descriptions of this application, "at least one (item) "means one or more, "a plurality of" means two or more, and "at least two (items)" means two, three, or more. In addition, "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "One or more of the following" or a similar expression thereof means any combination of these items. For example, one or more of the following: a, b, or c, may represent: a, b, c, a and b, a and c, b and c, or a, b, and c.

In this application, the word "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

In this application, unless otherwise specified, an element indicated in a singular form is intended to indicate "one or more", but does not indicate "one and only one".

The technical solutions provided in this application may be applicable to a wireless personal area network (WPAN) based on a UWB technology. For example, a method provided in this application may be applicable to IEEE 802.15 series protocols, for example, an 802.15.4a protocol, an 802.15.4z protocol, or an 802.15.4ab protocol, or a future generation UWB WPAN standard. Examples are not enumerated herein. The method provided in this application may be further applied to various communication systems, such as an internet of things (internet of things, IoT) system, vehicle-to-everything (vehicle to X, V2X), and a narrowband internet of things (narrowband internet of things, NB-IoT) system, or is applied to a device in vehicle-to-everything, an internet of things node, a sensor, or the like in the internet of things (IoT, internet of things), a smart camera, a smart remote control, and a smart water or electricity meter in a smart home, a sensor in a smart city, and the like. The method provided in this application is further applicable to a long term evolution (long term evolution, LTE) frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, an LTE system, a 5th-generation (5th-generation, 5G) communication system, a 6th-generation (6th-generation, 6G) communication system, and the like.

The UWB technology is a new wireless communication technology. In the UWB technology, nanosecond-level non-sinusoidal wave narrow pulses are used for data transmission, and modulation is performed on an impulse with very steep rise and fall time, and therefore, the UWB technology has a wide spectrum range for transmission, so that a signal has a bandwidth of a Giga Hertz (GHz) magnitude. A bandwidth used by UWB is usually higher than 500 MHz. A UWB system does not need to generate a sinusoidal carrier signal and may directly transmit an impulse sequence. Therefore, the UWB system has a wide spectrum and low average power. A UWB wireless communication system has advantages such as a strong multi-path resolution capability, low power consumption, and high confidentiality. This facilitates coexistence with other systems, thereby improving spectrum utilization and system capacity. In addition, in a short-range communication application, transmit power of a UWB transmitter may be usually lower than 1 mW (milliwatt). Theoretically, interference generated by a UWB signal is only equivalent to white noise. This facilitates good coexistence between the ultra-wideband and narrowband communication. Therefore, both the UWB system and a narrowband (narrowband, NB) communication system can operate without interfering with each other. The method provided in this application may be implemented by a communication apparatus in a wireless communication system. In a communication apparatus, an apparatus or a chip for implementing a function of a UWB system may be referred to as a UWB module, and an apparatus or a chip for implementing a function of a narrowband communication system may be referred to as a narrowband communication module. The UWB module and the narrowband communication module may be different apparatuses or chips. Certainly, the UWB module and the narrowband communication module may alternatively be integrated into one apparatus or chip. Implementations of the UWB module and the narrowband communication module in the communication apparatus are not limited in embodiments of this application. The communication apparatus in this application includes a UWB module. In a possible implementation, the communication apparatus may further include a narrowband communication module.

Although embodiments of this application are mainly described by using a WPAN as an example, for example, a network used in IEEE 802.15 series standards is used as an example for description. A person skilled in the art easily understands that, various aspects in this application may be extended to another network using various standards or protocols, for example, a wireless local area network (wireless local area network, WLAN), Bluetooth (BLUETOOTH), a high performance radio LAN (high performance radio LAN, HIPERLAN) (a wireless standard similar to an IEEE 802.11 standard, mainly used in Europe), a wide area network (WAN), or another network known now or developed in the future. Therefore, regardless of used coverage and a used wireless access protocol, various aspects provided in this application are applicable to any appropriate wireless network.

Optionally, the communication apparatus in embodiments of this application may be a device that supports a plurality of WPAN standards, such as 802.15.4a, 802.15.4z, 802.15.4ab currently under discussion, or a subsequent release.

For example, the method provided in this application may be implemented by a communication apparatus in a wireless communication system, and the communication apparatus may be an apparatus in a UWB system. For example, the communication apparatus may include but is not limited to a communication server, a router, a switch, a bridge, a computer, a mobile phone, and the like that support a UWB technology. For another example, the communication apparatus may include user equipment (user equipment, UE). The user equipment may include various devices that support the UWB technology, such as a handheld device, a vehicle-mounted device (for example, a vehicle or a component mounted in a vehicle), a wearable device, an internet of things (internet of things, IoT) device, a computing device, or another processing device connected to a wireless modem. Examples are not enumerated herein. For another example, the communication apparatus may include a central control point, for example, a personal area network (personal area network, PAN) or a PAN coordinator. The PAN coordinator or the PAN may be a mobile phone, a vehicle-mounted device, an anchor (Anchor), a tag (tag), a smart home, or the like. For another example, the communication apparatus may include a chip, and the chip may be disposed in a communication server, a router, a switch, a terminal device, or the like. Examples are not enumerated herein.

In embodiments of this application, the communication apparatus may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that communication can be performed according to the method provided in embodiments of this application by running a program that records code of the method provided in embodiments of this application.

It may be understood that the foregoing descriptions of the communication apparatus are applicable to any communication apparatus in embodiments of this application.

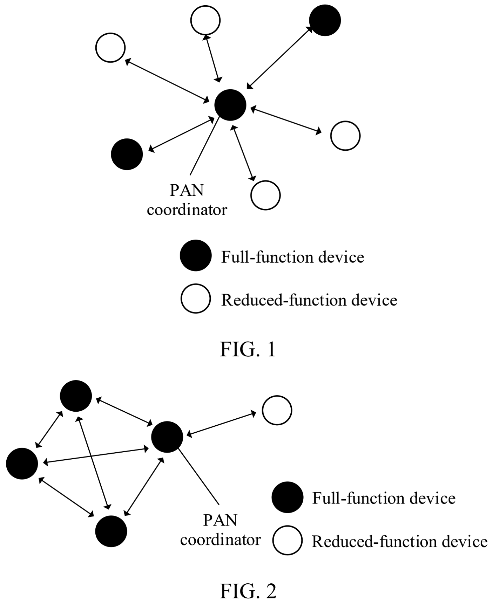

For example, FIG. 1 is a diagram of a structure of a wireless communication system according to an embodiment of this application. As shown in FIG. 1, the wireless communication system is a star topology structure. In this structure, a central control node (for example, a PAN coordinator in FIG. 1) may perform data communication with one or more other devices. FIG. 2 is a diagram of another structure of a wireless communication system according to an embodiment of this application. As shown in FIG. 2, the wireless communication system is a point-to-point topology structure. In this structure, a central control node (for example, a PAN coordinator in FIG. 2) may perform data communication with one or more other devices, and other different devices may also perform data communication with each other. In FIG. 1 and FIG. 2, both a full-function device (full-function device) and a reduced-function device (reduced-function device) may be understood as communication apparatuses shown in this application. The full-function device is relative to the reduced-function device. For example, the reduced-function device cannot be a PAN coordinator (coordinator). For another example, compared with the full-function device, the reduced-function device may have no coordination capability or have a lower communication rate than the full-function device. It may be understood that the PAN coordinator shown in FIG. 2 is merely an example, and each of the other three full-function devices shown in FIG. 2 may alternatively serve as a PAN coordinator. Examples are not enumerated herein. It may be further understood that the full-function device and the reduced-function device in this application are merely examples of the communication apparatus, and any apparatus that can implement a PPDU transmission method based on frequency band stitching provided in this application falls within the protection scope of this application.

The following briefly describes some terms or nouns in this application.

1. Periodic autocorrelation, periodic cross-correlation, aperiodic autocorrelation, and aperiodic cross-correlation

A periodic autocorrelation function $R_x^{p\text{-}auto}(\tau)$ of a sequence x(n) with a length of N is defined as follows:

$$R_x^{p\text{-}auto}(\tau) = \sum_{n=0}^{N-1} x(n) \times x((n+\tau)\bmod N) \dots\dots\dots\dots\dots\dots\dots\dots\dots\dots(1\text{-}1)$$

(n+$\tau$) mod N represents a remainder obtained by dividing (n+$\tau$) by N. This is not described in detail below. $\tau \in [0, N\text{-}1]$. This is not described in detail below.

An aperiodic autocorrelation function $R_x^{auto}(\tau)$ of the sequence x(n) is defined as follows:

$$R_x^{auto}(\tau) = \sum_{n=0}^{N-1} x(n) \times x(n+\tau) \dots\dots\dots\dots\dots\dots\dots\dots\dots\dots\dots(1\text{-}2)$$

A periodic cross-correlation function $R_{x,y}^{p-cross}(\tau)$ of the sequence x(n) with the length of N and another sequence y(n) with a length of N is defined as follows:

$$R_{x,y}^{p-cross}(\tau) = \sum_{n=0}^{N-1} x(n) \times y((n+\tau)\bmod N) \dots\dots\dots\dots\dots\dots\dots\dots\dots(1\text{-}3)$$

An aperiodic cross-correlation function $R_{x,y}^{cross}(\tau)$ of the sequence x(n) and the sequence y(n) is defined as follows:

$$R_{x,y}^{cross}(\tau) = \sum_{n=0}^{N-1} x(n) \times y(n+\tau) \dots\dots\dots\dots\dots\dots\dots\dots\dots\dots\dots(1\text{-}4)$$

2. Zero autocorrelation zone

A zero autocorrelation zone may be understood as that, except that an autocorrelation amplitude at an origin is not 0, autocorrelation amplitudes in other continuous time shifts are 0. For example, there are continuous values of $\tau$. In these values of $\tau$, a periodic autocorrelation function $R_x(\tau)$ of a sequence x(n) is 0. These continuous values of $\tau$ are referred to as a zero autocorrelation zone. However, outside the continuous values of $\tau$, a periodic autocorrelation function $R_x(\tau)$ of the sequence x(n) may be not 0, that is, a periodic autocorrelation side lobe amplitude of the sequence x(n) may be not 0.

3. PPDU structure in a UWB system

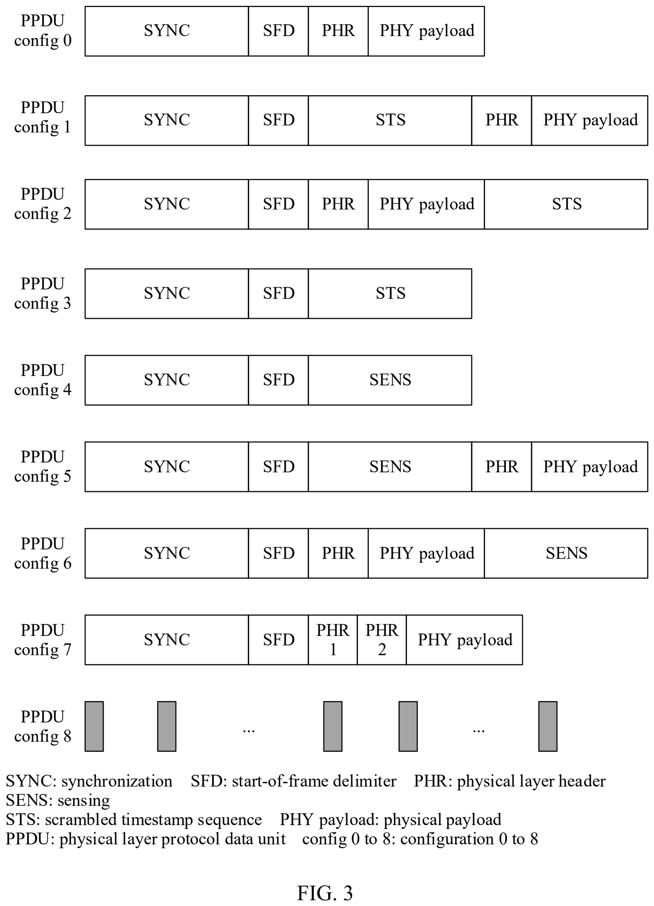

FIG. 3 is a diagram of PPDU structures in UWB systems according to an embodiment of this application. The PPDU structures currently defined in 802.15.4a, 802.15.4z, and 802.15.4ab standards are shown in FIG. 3. As shown in FIG. 3, nine possible PPDU structures are shown. Certainly, with development and evolution of standards, there may be more or fewer PPDU structures than those shown in FIG. 3. A PPDU in embodiments of this application is not limited to using any structure. As shown in FIG. 3, PPDU configuration 0 (config 0) to PPDU configuration 7 (config 7) include one or more of the following: a synchronization (synchronization, SYNC) field, a start-of-frame delimiter (start-of-frame delimiter, SFD) field, a physical layer header (physical layer header, PHR) field, a physical payload field (PHY payload field), a scrambled timestamp sequence (scrambled timestamp sequence, STS), or a sensing (sensing, SENS) field. In PPDU configuration 7, a PHR may be divided into two parts: a PHR 1 and a PHR 2. PPDU configuration 8 (config 8) is a structure of a multi-millisecond UWB frame. Each frame includes multiple UWB fragments (UWB fragments), and the multiple UWB fragments may form a PPDU. A start transmission time interval between adjacent UWB fragments is 1 millisecond (ms). The PPDU structure of the multi-millisecond UWB frame may include a synchronization (SYNC) field, and may further include a scrambled timestamp sequence (STS). The PPDU structure of the multi-millisecond UWB frame does not include a data part.

A receive end may perform PPDU detection and synchronization based on the synchronization (SYNC) field. The PHR field (for example, the PHR field defined in the 802.15.4z standard and the PHR defined in the 802.15.4ab standard, namely, the PHR 1 and the PHR 2) carries some physical layer indication information, such as modulation and coding information or PPDU length information, and may be used to assist the receive end in correctly demodulating data. The physical payload field may be used to carry data. The sensing (SENS) field may be used to implement a sensing function.

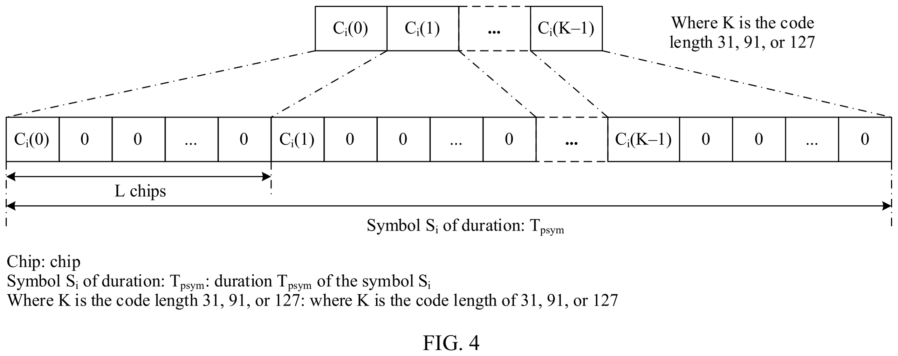

The synchronization (SYNC) field may include a plurality of repeated symbols, and the symbol may be generated by a preamble sequence. FIG. 4 is a diagram of a structure of a symbol included in a SYNC field according to an embodiment of this application. As shown in FIG. 4, $C_i(0)$, $C_i(1)$,..., and $C_i(K-1)$ represent a preamble sequence with a length of K. A spreading operation may be performed on the preamble sequence to generate a symbol (symbol). In FIG. 4, "L" may represent a spreading factor. For example, when the spreading factor L is equal to 4, it indicates that three 0 elements are filled after each element of the preamble sequence, to generate a symbol. For another example, when the spreading factor L is equal to 8, it indicates that seven 0 elements are filled after each element of the preamble sequence, to generate a symbol. For example, the length of the preamble sequence may be 31, 91, or 127 bits. For example, the preamble sequence may be a ternary sequence (which may also be referred to as an Ipatov sequence) including three elements {-1, 0, 1}. For example, for specific content of the ternary sequence (or the Ipatov sequence) with the length of 31, 91, or 127, refer to an 802.15.4a standard and an 802.15.4z standard. Details are not provided herein.

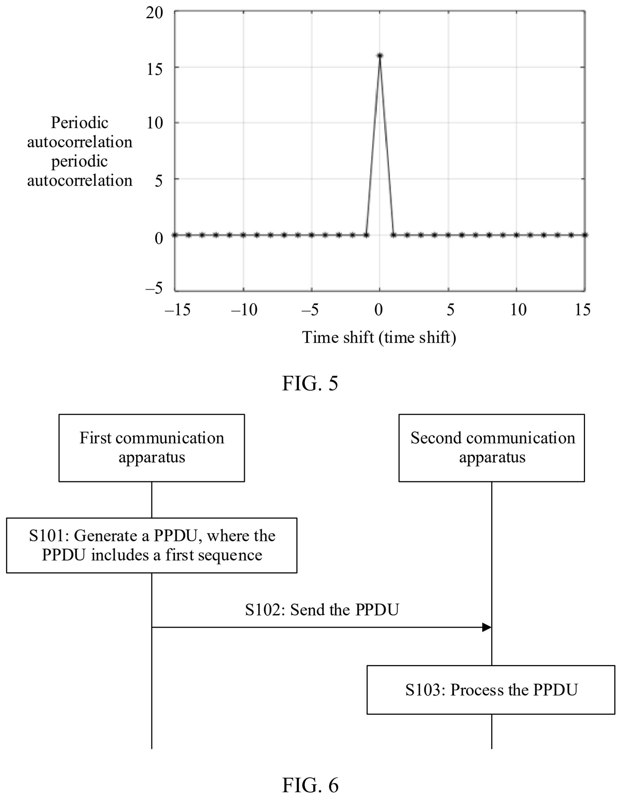

For example, an Ipatov sequence with a length of 31 in an 802.15.4a standard is used as an example. A simulation result of a periodic autocorrelation characteristic of the Ipatov sequence is shown in FIG. 5. FIG. 5 is a diagram of the autocorrelation simulation result of the Ipatov sequence according to an embodiment of this application. As shown in FIG. 5, the Ipatov sequence with the length of 31 has a value at an origin (in other words, a vertical ordinate at an origin is not 0), and is 0 at all other places of the abscissa (in other words, vertical ordinates at other non-origin points are 0). In FIG. 5, a periodic autocorrelation main lobe amplitude of the Ipatov sequence with the length of 31 is 16 (it may also be understood that a periodic autocorrelation peak value is 16), and a periodic autocorrelation side lobe amplitude is 0. It may be understood that the abscissa shown in FIG. 5 represents a time shift (time shift), and the vertical ordinate represents a periodic autocorrelation (periodic autocorrelation) amplitude. The abscissa shown in FIG. 5 may alternatively be understood as an element, a position, or the like. Interpretation of the abscissa used in simulation of a periodic autocorrelation function is not limited in embodiments of this application. Because autocorrelation may be understood as a cross-correlation between a signal and the signal itself at different time points, values on a positive axis (0 to 15) and values on a negative axis (-15 to 0) in the abscissa may be determined by the length of the Ipatov sequence. FIG. 5 is merely an example for description, and this is not limited.

In this application, a sequence whose periodic autocorrelation main lobe amplitude is not 0 and periodic autocorrelation side lobe amplitude is 0 is referred to as a perfect sequence (Perfect Sequence). It may be understood that a "perfect periodic autocorrelation characteristic" in this application means that a periodic autocorrelation main lobe amplitude is not 0, and a periodic autocorrelation side lobe amplitude is 0.

The receive end may use the periodic autocorrelation characteristic of the Ipatov sequence to perform correlation processing, for example, a correlation operation, on a received signal by using a same sequence, and perform channel measurement by using a correlation processing result (for example, a position of a correlation peak).

In a possible implementation, a structure of a symbol included in the sensing (SENS) field is the same as a structure of the symbol included in the SYNC field. Currently, the SENS field may use Ipatov sequences with lengths of 91 and 127.

A structure of a symbol included in the UWB fragment is also the same as the structure of the symbol included in the SYNC field. The UWB fragment may use Ipatov sequences with lengths of 91 and 127, and sequences shown in the following Table 1. It may be understood that, in Table 1, a symbol "+" represents "1", and a symbol "-" represents "-1".

Table 1

| Code index (code index) | Sequence (sequence) |
|---|---|
| 33 | +–++–++++–+++——+–++–+++–+——++++–++–++++–+++——+—+——+–+++——+–++–++++–+++——+–++–+++–+——+++–+—+——+——++++–++–+++–+——+++ |
| 34 | +——++——+++————+++–+—+–++++++++++–+–+–++++——+—+–++–++——++——+—++——+++——+++–+—+–++++++++++–+–+–+——++++–++–+—+—++—++ |
| 35 | +——++——+–+–++–+–++++++++——++++——+—+–++——+–+–+–+++++————++——+++——++—+–+–++–+–++++++++——++++——++–+—++–+–+–+————++++++—++—— |
| 36 | +——+———+——+—+–+—————++++–++–+—+——+++–+—+–+++——+—+——+–———+++–+++——+——+——+—+——++++–++–+——++++——+–++–+——+++–———+++–+——+—— |
| 37 | +————++++–+++–+++——+——+–++–+—+————++++–+++–++–+++–+++–+——+–+++————++++–+++–+++——+——+–++–+——++++———+——+—+———+——+–++–+—— |
| 38 | ++—+–+—————++——++–+–+————++——++–+–++++++—+—++–+–+————++–++—+–+—————++——++–+–+—————++–++—+–+————++–++—+–+–++++++—+ |
| 39 | ————+++–+—++–++—++++–++–+–+————+++–+—++——++———+——+–+–++++++++——+–++—+—++———+—+–+–+———+++–+—++——++———+—+—+–+–+ |
| 40 | ————++————++——++–+–+++—+–+————++–+++++–+——++–+–+————++–+–+++++++———++++++—+++——+–+———++–+–+————++–+++++—+——++–+–+—++–+–+ |
| 41 | ——++–++————+–+++——++————+–+————+–+—++–++–++++–+–+—+++——+++—+–+——++++++–+———+++—++++++–+–+————+–+—++–++–++++–+–+—+++——+ |
| 42 | –+——+———+++–++++–++–+———++++————+—+–++–++++———+–+++–++—++++–++++–+++–+++———+———+—+–+++————+++–+—+–+–++–++++——+———+++–++–+++–+++ |

(continued)

| Code index (code index) | Sequence (sequence) |
|---|---|
| 43 | –+——+—+–++–+——++++——+——+——+——+——+–+–++–++++——++++–++++–+++–++–+——+–+++——+++–+++–+++–+——+——+——+–++–++++——+++–+++ |
| 44 | –+–++–+————————++——++——++++——++–+——+——++—++–+–+–+–+———+++++–+——+–++++++++++—++——+++——++–++–+——+——++—++–+–+–+–+——++++ |
| 45 | –++——++–++——++–+–++–+–+++++++++–+–+–+————+++++——+–++——++——+++——++——+——++++——+–+——+–+————+–+–+–+——+++++——+–++——++——++ |
| 46 | +——++——+–+–++–+–+++++++++——++++——+——+–++——+–+–+–+++++——++——++–++——++–+–+——+–+————————++——+++——+–++——+–+–+–+++++–————–++——++ |
| 47 | +——+——+——+————+–+++——+–+——++–++–+++++——+————+–+——+++–+——++–++–++++–++–+++++–+——++–+–+++——++–+++++——+————+–+——+++–+——++ |
| 48 | ++——+–+——+——+—+++–+——+——+——+++–+–++++–++——+++–+——–+——+——+++–+–++++–++–++——+–+++++–++——+++–+–++++–++——+++–+————+——+ |

In conclusion, the Ipatov sequence used by the SENS field and SYNC field has excellent autocorrelation performance (a periodic autocorrelation main lobe amplitude is not 0 and a periodic autocorrelation side lobe amplitude is 0), but has poor cross-correlation performance, and easily has interference. However, the sequences in Table 1 have good cross-correlation performance (a cross-correlation amplitude between sequences is small), but has only a zero autocorrelation zone, and cannot be used in the sensing (SENS) field. This is because sensing is implemented by measuring a reflection path, and the receive end cannot determine whether a peak value outside the zero autocorrelation zone is a reflection path of a target or side lobe interference of autocorrelation.

Therefore, embodiments of this application provide a UWB-based PPDU transmission method and an apparatus. A sequence set used in a UWB system is designed and applied to a PPDU. Sequences in the sequence set have different lengths, and the sequences in the sequence set have good autocorrelation performance, cross-correlation performance, and anti-Doppler performance. This can reduce interference between devices and support coexistence of a plurality of devices.

The following describes in detail the technical solutions provided in this application with reference to more accompanying drawings.

In this application, unless otherwise specified, for same or similar parts of embodiments or implementations, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The following implementations of this application are not intended to limit the protection scope of this application.

The communication apparatus in this application may not only support 802.15 series protocols, such as an 802.15.4ab standard or a next-generation standard of 802.15.4ab, but also support other standard protocols (for example, 802.11 series protocols), such as a plurality of wireless local area network (wireless local area network, WLAN) standards of an 802.11 family, for example, 802.11be, Wi-Fi 7, or EHT (extremely high throughput, extremely high throughput), and for another example, a next generation of 802.11be, Wi-Fi 8, UHR (ultra high throughput, ultra high throughput), or Wi-Fi AI (Wi-Fi artificial intelligence). Certainly, the communication apparatus in this application may further support 802.11bf or a next-generation standard of 802.11bf in a UWB-based sensing sensing protocol.

FIG. 6 is a schematic flowchart of a UWB-based PPDU transmission method according to an embodiment of this application. A first communication apparatus and a second communication apparatus in the method may be any two devices that can perform data transmission in FIG. 1 or FIG. 2. As shown in FIG. 6, the UWB-based PPDU transmission method includes but is not limited to the following steps.

S101: The first communication apparatus generates a PPDU, where the PPDU includes a first sequence.

S102: The first communication apparatus sends the PPDU.

Correspondingly, the second communication apparatus receives the PPDU.

S103: The second communication apparatus processes the PPDU. For example, the second communication apparatus may process the received PPDU by using the locally pre-stored first sequence, for example, perform a correlation operation, and then perform operations such as time synchronization, ranging, sensing measurement, or device wakeup based on a result of the correlation operation. It may be understood that the first sequence locally pre-stored in the second communication apparatus may be determined with the first communication apparatus through negotiation in advance, or may be preconfigured, or the like. In other words, before the first communication apparatus sends the PPDU, both the first communication apparatus and the second communication apparatus have learned of the first sequence, or have agreed on content of the first sequence.

In a possible implementation, the PPDU includes the first sequence, and the first sequence may be used to implement one or more of the following functions: time synchronization, sensing measurement, ranging, or device wakeup. For example, the first sequence may be carried in one or more of the following fields of the PPDU: a synchronization (SYNC) field, a wakeup (wakeup) field, a sensing (SENS) field, or a ranging (ranging) field. A specific function of the first sequence is not limited in embodiments of this application.

In a possible implementation, the first sequence may be a binary sequence including two elements {1, -1}, or the first sequence may be a ternary sequence including three elements {-1, 0, 1}. A length of the first sequence may be any integer bit from 56 to 81 or from 106 to 162. This is because duration of a symbol in the SYNC field and the SENS field is about 1 $\mu$s (microsecond), and the value of the spreading factor L in FIG. 4 is 4 or 8. Therefore, the length of the sequence needs to be about 64 bits or 128 bits. When a spreading factor of the first sequence is 4, the length of the first sequence is any integer bit from 106 to 162 (including 106 and 162). When the spreading factor of the first sequence is 8, the length of the first sequence is any integer bit from 56 to 81 (including 56 and 81). Therefore, duration of a symbol generated by performing spreading on the first sequence is still about 1 $\mu$s, and meets a symbol duration requirement. For specific content of the first sequence, refer to the following descriptions.

In a possible implementation, an absolute value of a periodic autocorrelation maximum side lobe amplitude of the first sequence is less than or equal to 2. For example, that the absolute value of the periodic autocorrelation maximum side lobe amplitude of the first sequence is less than or equal to 2 is obtained through measurement when a carrier frequency offset (carrier frequency offset, CFO) is equal to 0. It may be understood that, for a binary or ternary sequence, a periodic autocorrelation side lobe amplitude of the sequence is an integer when a CFO is equal to 0. Therefore, the absolute value of the periodic autocorrelation maximum side lobe amplitude of the first sequence in embodiments of this application is equal to 0, 1, or 2 when the CFO is equal to 0. For example, when the length of the first sequence is any integer bit from 56 to 81 (including 56 and 81), the absolute value of the periodic autocorrelation maximum side lobe amplitude of the first sequence is 0 or 1 when the CFO is equal to 0. When the length of the first sequence is any integer bit from 106 to 162 (including 106 and 162), the absolute value of the periodic autocorrelation maximum side lobe amplitude of the first sequence is 0, 1, or 2 when the CFO is equal to 0.

In embodiments of this application, the periodic autocorrelation maximum side lobe amplitude of the first sequence is constrained to be a small value, so that a receive end determines a position of a correlation peak based on the correlation operation, thereby obtaining better sensing, synchronization, and ranging performance, or the like.

In a possible implementation, the first sequence is any sequence in a sequence set, and the length of the first sequence is different from a length of another sequence in the sequence set. The sequence set includes at least two sequences. In some scenarios, sequences in the sequence set have different lengths in embodiments of this application. For specific content of the sequence set designed in embodiments of this application, refer to the following descriptions.

It may be understood that in a sequence set including K sequences (lengths of the K sequences are N), autocorrelation performance of any sequence and cross-correlation performance of the sequence and another sequence in the sequence set need to satisfy the Sarwate bound theoretically. An expression of the Sarwate bound is as follows:

$$\frac{N-1}{N(K-1)} \cdot \left(\frac{\theta_a^2}{N}\right) + \left(\frac{\theta_c^2}{N}\right) \geq 1 \quad \dots\dots\dots\dots\dots\dots\dots\dots\dots\dots\dots\dots\dots\dots\dots\dots\dots\dots\dots\dots\dots(2\text{-}1)$$

$\theta_a$ is an autocorrelation side lobe maximum amplitude of a sequence, $\theta_c$ is a cross-correlation maximum amplitude between any two sequences in the sequence set, N is the length of the sequence in the sequence set, and K is a quantity of sequences in the sequence set. It can be understood that the quantity of sequences in the sequence set is also referred to as sequence capacity. According to the expression (2-1) of the Sarwate bound, the length N of the sequence is fixed. When $\theta_a$ is small, for example, 0, 1, or 2, if there is large quantity of sequences in the sequence set (that is, a value of K is large), that is, when coexistence of a large quantity of devices is supported, $\theta_c$ needs to be large enough to satisfy the expression (2-1). For example, when N is 121 and $\theta_c$ is equal to 0, $\theta_c$ needs to be greater than or equal to 11. Larger $\theta_c$ indicates poorer cross-correlation performance between the sequences and a higher probability of generating interference. Therefore, for the sequence set including the sequences of the same length, when the value of K is large, if $\theta_a$ is small, $\theta_c$ needs to be large, and if $\theta_a$ is large, $\theta_c$ may be small. In other words, the autocorrelation performance and the cross-correlation performance of the sequences cannot be both good. In addition, in the conventional technology, when K is greater than 2, no sequence set can satisfy the Sarwate bound. Therefore, another manner needs to be used to improve cross-correlation performance between sequences, or reduce interference between the sequences.

In embodiments of this application, the first sequence used in the PPDU is constrained to have a different length from that of the another sequence in the sequence set (or all the sequences in the sequence set have different lengths), to reduce interference between the first sequence and the another sequence, and improve cross-correlation performance between sequences.

It may be understood that the SYNC field, the SENS field, and a UWB fragment each include a plurality of repeated symbols, and the symbols may be generated based on a sequence. For example, as shown in FIG. 4, the spreading operation may be performed on the sequence to generate the symbols (symbols). After receiving a plurality of symbols included in the foregoing fields, the receive end (for example, the second communication apparatus) may calculate a channel impulse response (channel impulse response, CIR), and then perform a corresponding operation based on the channel impulse response, for example, time synchronization, sensing measurement, ranging, or device wakeup. The channel impulse response (CIR) may be obtained by performing a correlation operation on one local symbol and each of the received plurality of symbols included in the foregoing fields, accumulating correlation results of the plurality of symbols, and then averaging finally obtained results.

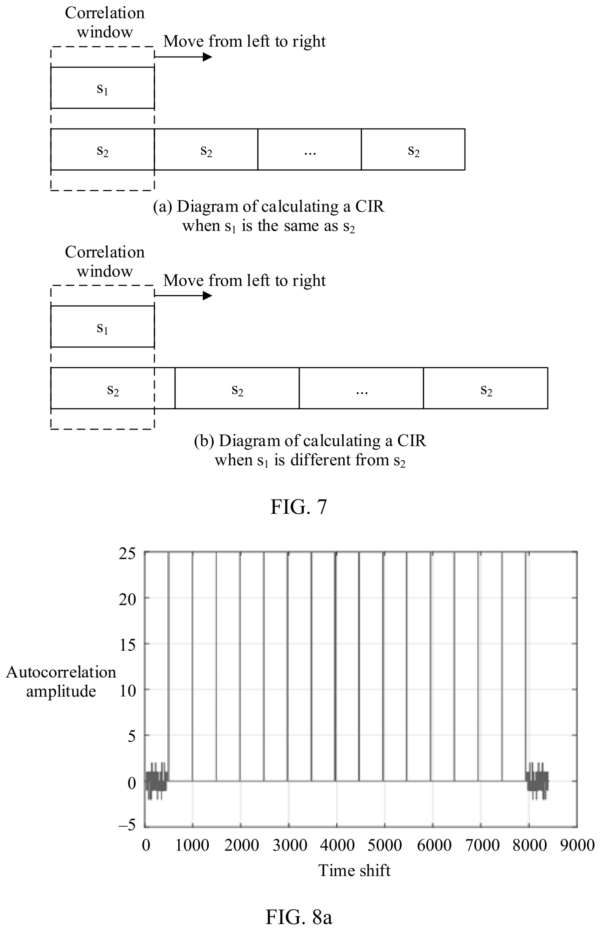

FIG. 7 is diagrams of calculating channel impulse responses according to an embodiment of this application. As shown in FIG. 7, si represents one symbol obtained after spreading is performed on a sequence A locally pre-stored by a receive end, where the sequence A locally pre-stored by the receive end is a sequence determined by the receive end and a target device through negotiation in advance; and $s_2$ represents a symbol received by the receive end, and the symbol may be obtained after spreading is performed on a sequence B. The receive end receives a plurality of repeated symbols, for example, a plurality of symbols $s_2$ in FIG. 7. The receive end uses a length of $s_1$ as a correlation window for movement from left to right sequentially. A length of each movement is 1 bit. In each correlation window, the receive end performs correlation accumulation on the same $s_1$ and the received symbols, to obtain correlation operation results.

As shown in (a) in FIG. 7, if the received $s_2$ is from the target device, the sequence A is the same as the sequence B, and spreading factors of the sequence A and the sequence B are the same. Therefore, si is the same as $s_2$. It is assumed that the receive end receives 16 symbols $s_2$, a correlation operation needs to be performed on $s_1$ and each of 16 symbols $s_2$. In this case, autocorrelation results are enhanced during a plurality of accumulations at a periodicity of the length of $s_1$, and the autocorrelation results are accumulated, then finally obtained results are averaged to be consistent with an autocorrelation result of $s_1$. In other words, accumulation and averaging operations do not affect autocorrelation performance of the sequence.

As shown in (b) in FIG. 7, if the received $s_2$ is not from the target device, the sequence A is different from the sequence B. Therefore, si is different from $s_2$. In this case, if $s_1$ and $s_2$ have different lengths, cross-correlation results between si and $s_2$ cannot be enhanced during a plurality of accumulations, and a cross-correlation result after averaging is reduced. This can reduce interference between the sequences, and improve cross-correlation performance between the sequences.

For example, it is assumed that the symbol $s_2$ received by the receive end is repeated 16 times, and a spreading factor is 4. It is further assumed that the sequence A locally pre-stored by the receive end is a shedd sequence with a length of 124, and specific values of the sequence are

{0    0 0   0   0   0   0   1   1   0   0   0   0   0   0   1   0   0   0   1   0   0

0 0   0   0   0   0   0   0   0   0   0   0   0   0   0   0   0   1   0   0

0 0   0   0   0   0   0   0   0   0   0   1   0   0   −1   −1   −1   0   0   0

0 0   0   0   0   0   0   0   0   0   −1   0   0   0   0   0   0   0   0   0

1 0   0   1   0   1   0   0   0   0   0   0   0   0   0   −1   0   0   −1   0

1 1   0   −1   1   −1   1   0   −1   0   1   0   0   0   0   0   0   0   1

−1   0   0}.

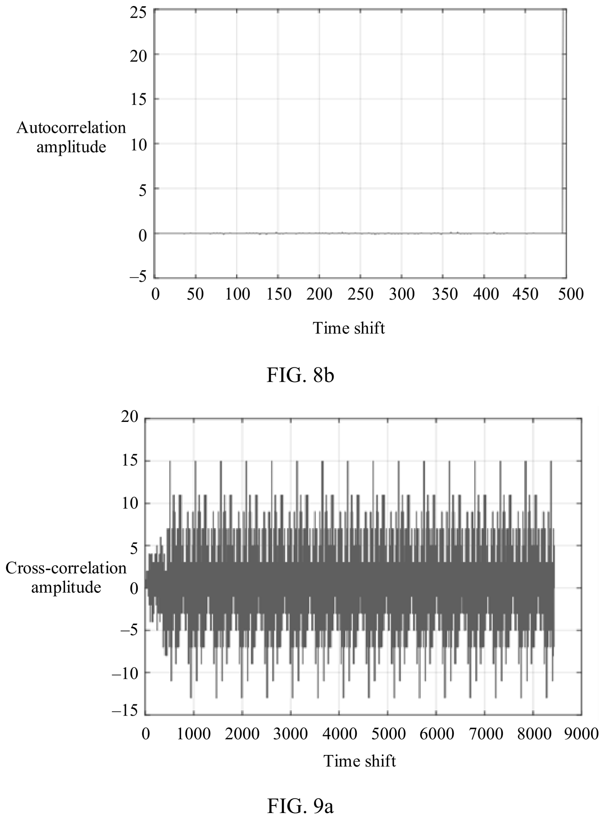

If the symbol $s_2$ is from the target device, it indicates that the sequence A is the same as the sequence B. In this case, the symbol $s_1$ obtained after spreading is performed on the sequence A (with a spreading factor 4) is the same as the symbol $s_2$. FIG. 8a is a diagram of simulation of autocorrelation results in a case in which the local symbol is the same as the received symbol according to this embodiment of this application. Because the length of the sequence A is 124 bits and the spreading factor is 4, a length of the symbol si is 496 bits. FIG. 8a shows the results of performing a correlation operation on the symbol si and each of the received 16 symbols $s_2$. It may be understood that, because the symbol $s_1$ is the same as the symbol $s_2$, the correlation operation on si and $s_2$ herein is autocorrelation. Then, the autocorrelation results of the symbol $s_1$ and the 16 symbols $s_2$ are accumulated at a periodicity of the length (496 bits) of the symbol si and then finally obtained results are averaged, to obtain a CIR shown in FIG. 8b. For example, in FIG. 8a, 496 amplitudes whose horizontal coordinates range from 0 to 495 are accumulated one by one with 496 amplitudes whose horizontal coordinates range from 496 to 991, to obtain 496 amplitudes. Then, the 496 amplitudes are accumulated one by one with 496 amplitudes whose horizontal coordinates range from 992 to 1487. The rest may be deduced by analogy. A total of 496 amplitudes are obtained through 15 accumulations, and then are averaged (that is, divided by 16), to obtain the CIR with a length of 496 shown in FIG. 8b.

It can be seen from FIG. 8a and FIG. 8b that the autocorrelation results are enhanced in a plurality of accumulations, and accumulation and averaging operations do not affect autocorrelation performance of the sequence. It may be understood that in FIG. 8a and FIG. 8b, the horizontal coordinate represents a time shift (time shift), and a vertical coordinate represents an autocorrelation amplitude. In FIG. 8a and FIG. 8b, the horizontal coordinate may also be understood as an element, a bit, or the like.

If the symbol $s_2$ is not from the target device, it indicates that the sequence A is different from the sequence B. Therefore, the symbol $s_1$ is different from the symbol $s_2$. It is assumed that the sequence B is a Legend sequence (a unit step sequence) with a length of 131, and specific values of the sequence are {-1 1 -1 -1 -1 1 -1 1 1 -1 1 -1 -1 -1 1 -1 -1 1 1 1 1 -1 -1 1 1 -1 1 -1 -1 1 1 1 1 -1 -1 -1 -1 1 -1 -1 1 1 -1 1 -1 -1 -1 1 1 -1 -1 1 1 1 -1 -1 1 1 -1 1 1 1 -1 -1 1 -1 -1 1 -1 -1 -1 1 1 1 1 1 1 1 1 -1 -1 1 1 1 1 -1 -1 1 1 1 -1 1 1 1 -1 -1 1 1 -1 -1 1 1 1 1 -1 -1 -1 -1 1 1 1 -1 1 -1 -1 -1 1 1 1 -1 -1 -1 -1 1 1 1 1 -1 1 1 -1 1 1 -1 1 1 1 1 -1 1 1}.

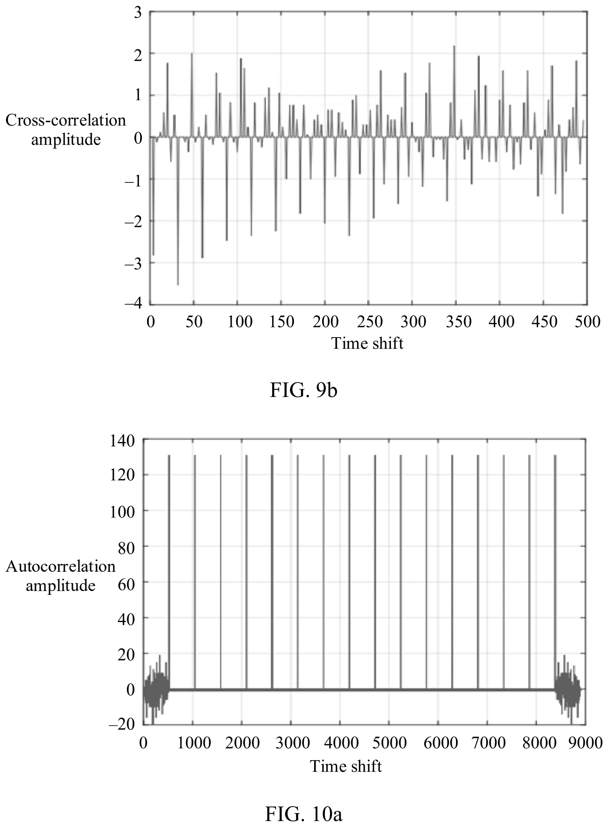

The symbol $s_1$ is obtained after spreading is performed on the sequence A (with the spreading factor of 4). FIG. 9a is a diagram of simulation of cross-correlation results in a case in which the local symbol is different from the received symbol according to this embodiment of this application. Because the length of the sequence A is 124 bits and the spreading factor is 4, a length of the symbol si is 496 bits. Because the length of the sequence B is 131 bits, and a spreading factor is 4, a length of the symbol $s_2$ is 524 bits. FIG. 9a shows the results of performing a correlation operation on the symbol $s_1$ and each of the received 16 symbols $s_2$. It may be understood that, because the symbol $s_1$ is different from the symbol $s_2$, the correlation operation on $s_1$ and $s_2$ herein is cross-correlation. Then, the cross-correlation results of the symbol si and the 16 symbols $s_2$ are accumulated at a periodicity of the length (496 bits) of the symbol si and then finally obtained results are averaged, to obtain a CIR shown in FIG. 9b. For example, in FIG. 9a, 496 amplitudes whose horizontal coordinates range from 0 to 495 are accumulated one by one with 496 amplitudes whose horizontal coordinates range from 496 to 991, to obtain 496 amplitudes. Then, the 496 amplitudes are accumulated one by one with 496 amplitudes whose horizontal coordinates range from 992 to 1487. The rest may be deduced by analogy. A total of 496 amplitudes are obtained through 15 accumulations, and then are averaged (that is, divided by 16), to obtain the CIR with a length of 496 shown in FIG. 9b. It may be understood that in FIG. 9a and FIG. 9b, the horizontal coordinate represents a time shift (time shift), and a vertical coordinate represents a cross-correlation amplitude. In FIG. 9a and FIG. 9b, the horizontal coordinate may also be understood as an element, a bit, or the like.

As shown in FIG. 9a, a maximum absolute value of a cross-correlation amplitude of the symbol $s_1$ and the symbol $s_2$ is 15. However, after the plurality of accumulations are performed and averaging is performed, a maximum absolute value of the cross-correlation amplitude in FIG. 9b is about 3.5. It can be learned that cross-correlation results between two sequences with different sequence lengths cannot be enhanced during a plurality of accumulations, and cross-correlation results obtained after averaging is performed are reduced.

Therefore, in embodiments of this application, the sequence set is designed, and the absolute value of the periodic autocorrelation maximum side lobe amplitude of a sequence in the sequence set is less than or equal to 2, to obtain better sensing, synchronization, and ranging performance, or the like. In addition, the sequences in the sequence set have different lengths, to reduce the maximum absolute value of the cross-correlation amplitude obtained after a plurality of accumulations are performed on the cross-correlation results and finally obtained results are averaged, reduce interference between the devices, and support coexistence of the plurality of devices.

The following uses examples to describe the sequence set designed in embodiments of this application and design principles of the sequence set.

In a possible implementation, to ensure ranging and sensing performance, it is required that the sequences in the sequence set have good autocorrelation performance, for example, a periodic autocorrelation main lobe amplitude of the sequence is large, and an absolute value of a periodic autocorrelation maximum side lobe amplitude of the sequence is small. In addition, to support coexistence of the plurality of devices and reduce interference, it is required that the sequences in the sequence set have good cross-correlation performance, for example, a maximum absolute value of a cross-correlation amplitude between the sequences is small. In addition, the symbol, in the sequence in the sequence set, obtained after spreading needs to meet a requirement that duration of the symbol is about 1 µs. Based on these considerations, the design principles of the sequence set in embodiments of this application are as follows.

(1) The duration of the symbol is about 1 µs. When a spreading factor is 4, the length of the sequence is any integer bit from 106 to 162 (including 106 and 162). When a spreading factor is 8, a length of a sequence is any integer bit from 56 to 81 (including 56 and 81).

(2) Autocorrelation performance is considered. To ensure ranging and sensing performance, when a CFO is equal to 0, the absolute value of the periodic autocorrelation maximum side lobe amplitude of the sequence in the sequence set is equal to 0, 1, or 2, and a ratio of an autocorrelation main lobe amplitude of the sequence in the sequence set to the autocorrelation maximum side lobe amplitude of the sequence in the sequence set is greater than or equal to a first preset threshold. It may be understood that, because the first sequence is any sequence in the sequence set, a ratio of an autocorrelation main lobe amplitude of the first sequence to an autocorrelation maximum side lobe amplitude is also greater than or equal to the first preset threshold. Herein, the autocorrelation main lobe amplitude may be a periodic autocorrelation main lobe amplitude, and the autocorrelation maximum side lobe amplitude may be a periodic autocorrelation maximum side lobe amplitude. Certainly, the autocorrelation main lobe amplitude may alternatively be an aperiodic autocorrelation main lobe amplitude, and the autocorrelation maximum side lobe amplitude may alternatively be an aperiodic autocorrelation maximum side lobe amplitude. This is not limited in embodiments of this application. For example, the first preset threshold may be 35 dB (decibels). Certainly, the first preset threshold may alternatively be a value around 35 dB, for example, 30 dB, 34.5 dB, 36 dB, or 40 dB. It may be understood that a larger ratio of the autocorrelation main lobe amplitude to the autocorrelation maximum side lobe amplitude indicates that it is easier to distinguish between an autocorrelation main lobe and an autocorrelation side lobe, and ranging and sensing performance is better. However, when the absolute value of the periodic autocorrelation maximum side lobe amplitude of the sequence is equal to 1 or 2, the larger ratio of the autocorrelation main lobe amplitude to the autocorrelation maximum side lobe amplitude indicates a larger autocorrelation main lobe amplitude, that is, a larger quantity of non-zero elements in the sequence, a longer length of the sequence, higher complexity of performing the correlation operation, and higher power consumption. Therefore, when both the length (or power consumption) of the sequence and ranging performance are considered, the first preset threshold is set to 35 dB, so that performance of common ranging (without an STS in the PPDU) is close to performance of secure ranging (with an STS in the PPDU).

(3) Cross-correlation performance is considered. To reduce interference, a ratio of a maximum absolute value of an amplitude to an autocorrelation main lobe amplitude of a symbol corresponding to any other sequence (for example, a second sequence) is less than or equal to a second preset threshold, and the amplitude is obtained after cross-correlation results between a plurality of repeated symbols corresponding to a sequence (for example, the first sequence) in the sequence set and the symbol corresponding to the any other sequence (for example, the second sequence) in the sequence set are accumulated at a periodicity of a length of the symbol corresponding to the any other sequence (for example, the second sequence) and then finally obtained results are averaged. For example, the first sequence and the second sequence have different lengths. In embodiments of this application, "a symbol corresponding to a sequence" may be understood as a symbol generated after spreading of the sequence. For example, the second preset threshold may be -20 dB, or a value around -20 dB, for example, -19 dB, -19.9 dB, -18 dB, -21 dB, or -22 dB. In this way, performance of common ranging (without the STS in the PPDU) is close to performance of secure ranging (with the STS in the PPDU), and whether the received sequence is from the target device, that is, whether the received sequence is interference, can be better distinguished.

(4) A binary sequence and a ternary sequence are considered. The sequence set may include a plurality of types of sequences, for example, an Ipatov sequence, an m sequence, a Legend sequence, a two-prime sequence, a Ding-H-M sequence, a Sidelnikov sequence, and a Shedd sequence. For descriptions of the sequences of the types, refer to the conventional technology. Details are not described in this application.

There are a plurality of sequences that meet the foregoing design principles (1) to (4), as shown in the following Table 2a and Table 2b. Table 2a shows sequences that meet the foregoing principles (1) to (4) when the spreading factor is 8. Table 2b shows sequences that meet the foregoing principles (1) to (4) when the spreading factor is 4. A quantity of sequences is also referred to as sequence capacity, and a quantity of non-zero elements in the sequence is also referred to as sequence energy.

Table 2a

| Sequence type | Ipatov sequence | Shedd sequence |
|---|---|---|
| Length of a sequence | 57 | 63 |
| Quantity of sequences | 12 | 6 |
| Quantity of non-zero elements in a sequence | 49 | 16 |

Table 2b

| Absolute value of an autocorrelation maximum side lobe amplitude in a case in which there is no CFO (namely, CFO=0) | Sequence type | Length of a sequence | Quantity of sequences | Quantity of non-zero elements in a sequence |
|---|---|---|---|---|
| 0 | Ipatov sequence | 114 | 12 | 49 |
| | Ipatov sequence | 121 | 22 | 81 |
| | Ipatov sequence | 124 | 10 | 100 |
| | Ipatov sequence | 133 | 36 | 121 |
| 1 | m-sequence | 127 | 18 | 127 |
| | Legend sequence | 131 | 1 | 131 |
| | Legend sequence | 139 | 1 | 139 |
| | Two-Prime sequence | 143 | 1 | 143 |
| | Legend sequence | 151 | 1 | 151 |
| 2 | Ding-H-M sequence | 106 | 4 | 106 |
| | Sidelnikov sequence | 112 | 1 | 112 |
| | Sidelnikov sequence | 120 | 1 | 120 |
| | Sidelnikov sequence | 126 | 1 | 126 |
| | Sidelnikov sequence | 130 | 1 | 130 |
| | Sidelnikov sequence | 136 | 1 | 136 |
| | Sidelnikov sequence | 138 | 1 | 138 |
| | Sidelnikov sequence | 148 | 1 | 148 |
| | Sidelnikov sequence | 156 | 1 | 156 |
| | Sidelnikov sequence | 162 | 1 | 162 |

It can be learned from Table 2a and Table 2b that there may be a plurality of sequences having a same length in the sequences that meet the design principles (1) to (4). In this application, selection is further performed on the plurality of sequences having the same length in Table 2a and Table 2b according to the following principles: (a) Only one sequence is selected from the sequences having the same length. (b) In the plurality of sequences having the same length, one sequence with best autocorrelation performance when the CFO is not equal to 0 is selected. In this way, all or some selected sequences may be used as a sequence set, and the sequences in the sequence set have good autocorrelation performance and cross-correlation performance, and also have good anti-Doppler performance.

For example, sequences that meet the design principles (1) to (4) and the selection principles (a) and (b) are shown in the following Table 3a, Table 3b, Table 4, Table 5a, and Table 5b. Table 3a shows sequences that meet the design principles (1) to (4) and the selection principles (a) and (b) when the spreading factor is 8 and aperiodic correlation is used. Table 3b shows sequences that meet the design principles (1) to (4) and the selection principles (a) and (b) when the spreading factor is 8 and periodic correlation is used. Table 4 shows sequences whose quantity of sequences is 1 in Table 2b. Table 5a shows sequences whose quantity of sequences is greater than 1 in Table 2b when aperiodic correlation is used and that meet the design principles (1) to (4) and selection principles (a) and (b). Table 5b shows sequences whose quantity of sequences is greater than 1 in Table 2b when periodic correlation is used and that meet the design principles (1) to (4) and selection principles (a) and (b).

It may be understood that the sequences provided in this specification are merely examples, and any sequence that meets at least one of the design principles (1) to (4) and the selection principles (a) and (b) falls within the protection scope of embodiments of this application.

In a possible implementation, the first sequence may be any sequence in sequences in Table 3a, Table 3b, Table 4, Table 5a, or Table 5b, and the first sequence may be any sequence in the sequence set. Correspondingly, the second sequence is any sequence that is different from the first sequence in the sequence set, and the length of the second sequence is different from the length of the first sequence. The sequence set designed in embodiments of this application may include any one or more sequences in Table 3a, Table 3b, Table 4, Table 5a, or Table 5b. In other words, the sequence set actually used in this application may be a subset of the sequences listed in Table 3a to Table 5b, or the sequence set actually used in this application may include some of the sequences listed in Table 3a to Table 5b.

It may be understood that the sequences in Table 3a to Table 5b are merely examples, and the sequences may be varied. For example, sequences obtained after operations such as cyclic sampling, reversing, cyclic shifting, or multiplying by "-1" element by element are performed on the Ipatov sequences, m sequences, and Legend sequences in Table 3a to Table 5b fall within the protection scope of embodiments of this application.

Table 3a

| Sequence type | Length of a sequence | Specific sequence |
|---|---|---|
| Ipatov sequence | 57 | −1 0 −1 −1 −1 1 −1 −1 −1 1 1 0 −1 −1 1<br>−1 −1 1 −1 1 1 −1 1 −1 1 1 −1 −1 −1<br>0 −1 1 0 1 −1 −1 −1 1 1 1 1 1 1<br>0 −1 1 −1 −1 −1 1 −1 0 0 −1 −1 1 0 |
| Shedd sequence | 63 | 0 −1 0 0 0 0 1 0 0 0 0 0 0 0 0<br>1 0 0 0 0 0 0 0 0 1 1 1 0 1<br>−1 0 0 1 0 −1 0 0 0 0 0 1 −1 0<br>0 −1 0 0 0 0 0 0 1 0 0 0 0 1<br>0 −1 0 0 0 0 |

Table 3b

| Sequence name | Length of a sequence | Specific sequence |
|---|---|---|
| Ipatov sequence | 57 | 1 −1 1 −1 0 0 −1 0 −1 −1 −1 −1 1 1 1<br>−1 −1 0 −1 −1 −1 1 1 1 −1 −1 1 −1 1<br>−1 −1 −1 −1 −1 1 −1 0 1 −1 1 0 1 1<br>1 −1 1 1 0 −1 1 −1 −1 1 1 −1 −1 0 |

(continued)

| Sequence name | Length of a sequence | Specific sequence |
|---|---|---|
| Shedd sequence | 63 | 0 0 0 0 1 −1 −1 0 −1 0 0 0 −1 1 0<br>0 0 1 0 0 −1 0 1 1 0 0 0 0 0<br>0 1 0 0 0 0 0 −1 0 0 0 1 0 1<br>0 0 1 0 0 0 0 0 0 0 0 0 0 1<br>0 0 0 0 0 0 |

Table 4

| Sequence type | Length of a sequence | Specific sequence |
|---|---|---|
| Sidelnikov sequence | 112 | 1 1 −1 1 1 1 1 1 1 1 1 1 −1 1 −1<br>−1 1 −1 −1 1 1 −1 1 −1 −1 1 −1 1 1<br>1 −1 −1 −1 1 −1 −1 1 1 −1 1 −1 −1 −1 |
|  |  | 1 1 1 1 1 −1 1 1 −1 −1 −1 1 −1 1<br>1 1 1 −1 1 1 −1 −1 −1 1 −1 1 −1 −1<br>1 −1 −1 −1 −1 1 1 −1 −1 −1 1 −1 −1 1<br>−1 −1 −1 −1 1 1 1 1 −1 −1 1 1 1 −1<br>−1 −1 −1 1 −1 1 −1 1 −1 1 −1 −1 −1 |
| Sidelnikov sequence | 120 | 1 −1 −1 1 −1 −1 −1 1 −1 −1 −1 −1 1 −1 −1<br>1 −1 1 1 −1 1 1 −1 −1 1 1 1 1 1<br>1 −1 1 −1 1 −1 1 1 −1 1 −1 1 −1 1<br>−1 −1 1 1 −1 1 1 −1 1 1 −1 −1 −1 −1<br>1 1 1 1 −1 1 −1 −1 1 −1 1 1 −1 −1<br>−1 1 1 1 −1 −1 1 1 1 1 1 1 1 1<br>−1 −1 −1 −1 −1 −1 −1 1 −1 1 −1 1 1 −1<br>−1 1 1 1 −1 −1 −1 −1 1 1 1 −1 1 −1<br>−1 −1 1 −1 −1 −1 1 |

(continued)

| Sequence type | Length of a sequence | Specific sequence |
|---|---|---|
| Sidelnikov sequence | 126 | 1 1 −1 −1 1 1 −1 −1 −1 −1 1 −1 1 −1 −1<br>−1 1 1 −1 1 1 −1 1 1 −1 1 −1 1 1<br>−1 −1 1 −1 1 1 −1 1 1 1 1 −1 1 −1<br>1 −1 −1 1 1 1 1 1 1 1 1 −1 −1 1<br>−1 −1 −1 −1 1 −1 1 −1 −1 −1 1 −1 1 1<br>1 −1 −1 1 −1 1 −1 1 −1 1 1 −1 −1 −1<br>−1 −1 −1 1 −1 1 1 1 −1 −1 −1 −1 1 1<br>−1 −1 −1 −1 −1 1 1 1 −1 −1 −1 1 1 −1<br>1 1 1 1 1 −1 1 −1 −1 1 1 −1 −1 |
| Sidelnikov sequence | 130 | −1 1 1 1 −1 1 1 1 −1 −1 1 1 1 −1 −1<br>−1 −1 −1 −1 1 1 1 −1 −1 −1 −1 −1 1 −1<br>−1 1 1 −1 −1 −1 1 1 1 −1 1 −1 1 1<br>−1 1 −1 −1 1 1 1 1 −1 1 1 1 −1 1<br>−1 1 1 1 1 −1 1 −1 1 −1 −1 −1 −1 1<br>−1 1 1 1 1 1 −1 1 1 1 −1 1 −1 −1<br>1 1 1 1 −1 −1 −1 −1 −1 1 −1 −1 1 −1<br>−1 1 1 −1 −1 −1 1 −1 1 −1 −1 1 −1 −1<br>1 −1 1 −1 1 1 −1 1 1 −1 −1 1 −1 −1<br>−1 1 −1 |
| Legend sequence | 131 | −1 1 −1 −1 −1 1 −1 1 −1 1 −1 −1 −1 1 −1<br>−1 1 1 1 −1 −1 1 1 1 −1 1 −1 −1 1<br>1 1 1 −1 −1 −1 −1 1 −1 −1 1 −1 1 −1<br>−1 −1 −1 1 −1 −1 1 1 −1 −1 1 −1 1 1<br>−1 −1 −1 −1 −1 −1 −1 −1 1 1 1 1 1 1<br>1 1 −1 −1 1 −1 1 1 −1 −1 1 1 −1 1<br>1 1 1 −1 1 −1 1 1 −1 1 1 1 1 −1<br>−1 −1 −1 1 1 −1 1 −1 −1 −1 1 1 −1 −1<br>−1 1 1 −1 1 1 1 −1 1 −1 1 −1 1 1<br>1 −1 1 1 |

(continued)

| Sequence type | Length of a sequence | Specific sequence |
|---|---|---|
| Sidelnikov sequence | 136 | 1 1 −1 1 −1 1 −1 1 1 1 −1 1 1 −1 −1<br>1 −1 1 −1 −1 −1 −1 1 1 −1 1 −1 1 1<br>−1 1 1 1 −1 1 −1 −1 1 1 −1 1 1 1<br>1 1 −1 −1 −1 −1 1 −1 −1 1 −1 −1 1 1<br>1 1 1 1 1 −1 −1 −1 1 1 −1 1 1 1<br>−1 −1 1 −1 −1 1 −1 1 −1 1 −1 −1 1 1<br>1 −1 −1 −1 1 −1 1 1 −1 1 −1 1 1 1<br>−1 −1 1 1 1 1 −1 1 1 1 −1 −1 −1 −1<br>−1 1 1 −1 1 −1 −1 −1 −1 −1 1 1 −1 −1<br>−1 1 −1 −1 −1 −1 −1 −1 −1 |
| Sidelnikov sequence | 138 | −1 −1 1 1 −1 −1 1 1 1 1 1 −1 1 1 1<br>−1 −1 −1 −1 1 1 −1 −1 −1 −1 −1 −1 1 1<br>−1 1 1 1 1 −1 1 −1 −1 −1 1 −1 1 1<br>1 1 1 −1 1 1 −1 −1 −1 1 1 1 1 −1<br>1 1 −1 1 1 −1 1 −1 −1 −1 −1 −1 1 −1<br>1 −1 1 −1 −1 −1 −1 1 1 1 −1 −1 −1 1<br>−1 1 1 −1 1 1 −1 −1 −1 1 −1 1 −1 −1<br>−1 −1 1 −1 −1 −1 −1 1 −1 1 1 1 −1 −1<br>1 −1 1 −1 1 1 −1 −1 1 −1 1 1 −1 1<br>1 1 −1 1 −1 1 1 −1 −1 1 1 |
| Legend sequence | 139 | −1 1 1 −1 −1 −1 −1 1 −1 1 −1 1 −1 1 1<br>−1 1 1 1 −1 1 1 1 −1 −1 1 1 −1 −1<br>−1 −1 1 1 −1 −1 −1 −1 −1 1 1 −1 −1 1<br>−1 −1 −1 −1 1 −1 1 −1 −1 1 −1 −1 1 −1<br>1 1 1 1 1 −1 −1 −1 −1 −1 1 −1 1 −1<br>−1 1 1 −1 1 −1 1 1 1 1 −1 1 1 −1<br>−1 1 1 1 1 1 −1 −1 1 1 1 1 −1 −1<br>1 1 −1 −1 −1 1 −1 −1 −1 1 −1 −1 1 −1<br>1 −1 1 −1 1 1 1 1 −1 −1 1 1 |

(continued)

| Sequence type | Length of a sequence | Specific sequence |
|---|---|---|
| Two-Prime sequence | 143 | −1 −1 −1 −1 −1 1 −1 −1 −1 −1 1 1 −1 −1 −1<br>1 −1 1 −1 −1 1 −1 1 −1 −1 −1 −1 −1 −1<br>1 1 1 −1 1 1 1 −1 1 −1 −1 1 −1 −1<br>1 1 1 −1 1 −1 −1 −1 1 −1 −1 −1 1 −1<br>−1 1 1 1 1 1 −1 −1 −1 1 1 1 −1 1<br>1 −1 −1 1 −1 −1 1 −1 1 1 −1 −1 −1 −1<br>−1 1 1 1 1 1 −1 −1 1 1 1 −1 1 −1<br>1 −1 1 1 −1 −1 1 −1 1 −1 −1 1 1 −1<br>−1 −1 1 1 −1 1 1 1 1 1 −1 1 1 −1<br>1 −1 1 −1 1 1 −1 1 1 1 1 −1 1 1<br>1 1 |
| Sidelnikov sequence | 148 | −1 −1 1 1 1 1 −1 1 −1 −1 −1 1 −1 −1 1<br>−1 −1 1 1 1 1 1 1 −1 −1 1 −1 1 1<br>1 1 1 1 1 −1 −1 −1 −1 −1 1 1 1 −1<br>1 1 1 1 −1 −1 1 1 1 1 −1 −1 1 −1<br>−1 1 1 1 −1 −1 −1 1 −1 −1 −1 1 −1 −1<br>−1 −1 −1 1 1 −1 1 −1 1 1 1 −1 1 1<br>1 −1 1 1 −1 1 1 −1 −1 −1 1 1 −1 1<br>−1 −1 1 1 −1 1 −1 −1 −1 1 −1 −1 1 −1<br>1 −1 −1 1 −1 1 −1 1 −1 −1 −1 −1 1 1<br>−1 1 −1 1 −1 −1 1 1 1 −1 −1 −1 1 −1<br>−1 −1 −1 1 −1 1 1 |
| Legend sequence | 151 | −1 −1 1 −1 −1 1 1 −1 −1 −1 −1 1 1 1 1<br>−1 −1 −1 −1 −1 −1 −1 1 1 −1 1 1 1 −1<br>1 −1 −1 1 −1 1 −1 −1 −1 −1 −1 1 −1 −1<br>−1 −1 1 −1 1 −1 −1 1 1 1 1 −1 1 1 |

(continued)

| Sequence type | Length of a sequence | Specific sequence |
|---|---|---|
| | | −1 −1 1 1 −1 1 −1 1 1 1 −1 −1 1 1<br>−1 1 −1 1 −1 1 −1 1 −1 −1 1 1 −1 −1<br>−1 1 −1 1 −1 −1 1 1 −1 −1 1 −1 −1 −1<br>−1 1 1 −1 1 −1 1 1 1 1 −1 1 1 1<br>1 1 −1 1 −1 1 1 −1 1 −1 −1 −1 1 −1<br>−1 1 1 1 1 1 1 1 −1 −1 −1 −1 1 1<br>1 1 −1 −1 1 1 −1 1 1 1 |
| Sidelnikov sequence | 156 | −1 −1 −1 1 −1 1 −1 −1 1 1 −1 1 −1 −1 1<br>−1 1 −1 −1 −1 −1 1 1 −1 −1 1 1 −1 1<br>1 −1 1 −1 −1 1 1 1 1 1 1 −1 1 −1<br>−1 −1 −1 −1 −1 1 1 1 −1 1 −1 1 −1 1<br>−1 −1 −1 1 −1 −1 1 1 1 −1 −1 1 −1 −1<br>1 1 −1 1 −1 −1 −1 1 1 −1 1 1 1 1<br>−1 −1 1 1 1 −1 −1 1 −1 −1 1 1 1 −1<br>1 1 1 1 1 1 1 1 −1 1 1 −1 1 −1<br>1 −1 −1 −1 −1 1 −1 1 −1 1 1 −1 −1 −1<br>−1 1 1 1 −1 −1 1 1 −1 −1 1 −1 1 1<br>1 1 1 −1 −1 −1 −1 1 1 −1 −1 −1 −1 −1<br>1 |
| Sidelnikov sequence | 162 | −1 −1 −1 1 −1 1 1 −1 −1 1 1 1 1 1 1<br>1 −1 1 1 1 1 1 1 1 −1 −1 1 −1 −1<br>1 1 1 −1 1 −1 −1 1 1 −1 1 1 −1 −1<br>−1 1 1 1 −1 −1 −1 −1 1 −1 1 −1 1 1<br>−1 1 1 −1 −1 1 1 1 1 −1 1 −1 −1 −1<br>−1 −1 −1 1 −1 1 1 1 −1 −1 1 −1 1 1<br>−1 1 1 1 1 −1 1 −1 1 −1 −1 −1 −1 1<br>−1 1 1 −1 −1 1 1 1 −1 −1 −1 −1 −1 −1<br>1 −1 1 1 −1 1 1 −1 1 1 −1 −1 −1 1<br>1 −1 −1 −1 −1 1 −1 −1 1 1 1 −1 −1 1<br>−1 1 −1 1 −1 −1 −1 1 −1 1 −1 1 −1 −1<br>1 1 −1 −1 −1 −1 1 |

Table 5a

| Sequence type | Length of a sequence | Specific sequence |
|---|---|---|
| Ding-H-M | 106 | 1 −1 −1 1 1 1 1 −1 1 −1 −1 −1 1 −1 1 −1 −1 −1 1 1 −1 1 1 1 −1 −1 −1 1 −1 −1 −1 1 −1 1 1 1 −1 −1 1 1 1 1 −1 −1 −1 1 −1 −1 −1 −1 1 1 1 1 −1 1 −1 −1 1 −1 1 1 1 −1 1 1 −1 1 −1 −1 1 1 −1 1 1 1 1 −1 1 1 1 −1 1 1 −1 1 1 1 −1 −1 1 −1 −1 −1 −1 −1 1 −1 −1 −1 −1 1 −1 1 1 −1 |
| Ipatov sequence (repeat 16 times) | 114 | 0 0 0 −1 0 −1 0 −1 0 1 0 −1 0 −1 0 −1 0 1 0 1 0 0 0 −1 0 −1 0 1 0 −1 0 −1 0 1 0 −1 0 1 0 1 0 −1 0 1 0 −1 0 1 0 1 0 −1 0 −1 0 −1 0 0 0 −1 0 1 0 0 0 1 0 −1 0 −1 0 −1 0 1 0 1 0 1 0 1 0 1 0 1 0 0 0 −1 0 1 0 −1 0 −1 0 −1 0 1 0 −1 0 0 0 0 0 −1 0 −1 0 1 0 0 0 |
| Ipatov sequence (a quantity of repetitions is greater than 16) | 114 | −1 0 −1 0 1 0 1 0 −1 0 −1 0 1 0 −1 0 0 0 1 0 1 0 −1 0 1 0 1 0 1 0 0 0 1 0 −1 0 1 0 0 0 −1 0 1 0 −1 0 −1 0 −1 0 −1 0 −1 0 1 0 −1 0 1 0 −1 0 −1 0 1 0 1 0 1 0 −1 0 −1 0 −1 0 0 0 −1 0 −1 0 1 0 1 0 1 0 −1 0 −1 0 −1 0 −1 0 0 0 −1 0 0 0 0 0 −1 0 1 0 −1 0 1 0 0 0 |

(continued)

| Sequence type | Length of a sequence | Specific sequence |
|---|---|---|
| Ipatov sequence | 121 | 1 −1 1 0 0 −1 0 −1 −1 1 1 1 0 0 0<br>0 1 1 0 −1 1 −1 −1 1 0 1 1 1 1<br>−1 1 −1 1 1 1 −1 −1 0 1 0 −1 1 1<br>1 1 1 0 −1 −1 0 −1 0 1 0 0 −1 1<br>0 −1 0 −1 0 −1 1 0 1 −1 −1 1 1 −1<br>1 0 −1 1 0 0 1 −1 −1 0 0 −1 −1 −1 |
| | | 0 −1 −1 0 0 1 1 −1 1 1 0 1 −1 1<br>0 1 0 0 1 0 0 0 −1 0 1 1 1 −1<br>0 1 1 −1 0 0 0 −1 |
| Ipatov sequence | 124 | 1 1 1 1 0 1 0 0 1 −1 1 −1 0 1 −1<br>−1 −1 1 1 −1 1 1 −1 1 0 −1 −1 −1 0<br>−1 −1 −1 1 1 −1 0 1 0 0 −1 −1 1 1<br>0 1 −1 1 1 1 1 1 −1 1 −1 −1 0 −1<br>−1 1 0 −1 −1 1 −1 1 −1 0 −1 0 0 1<br>1 1 1 0 −1 −1 1 −1 −1 1 1 1 −1 −1<br>−1 0 1 −1 1 0 1 −1 1 1 −1 −1 0 1<br>0 0 1 −1 −1 1 0 1 1 1 −1 1 −1 1<br>1 1 1 −1 0 −1 1 1 0 −1 1 |
| m-sequence | 127 | −1 1 1 1 1 1 1 −1 −1 1 −1 −1 −1 −1 −1<br>1 1 1 1 1 −1 1 −1 −1 1 1 1 1 −1<br>1 1 1 1 −1 −1 −1 1 −1 1 1 1 −1 −1<br>1 1 1 −1 1 1 −1 −1 −1 1 1 −1 1 −1<br>1 1 −1 −1 1 −1 1 1 −1 1 −1 −1 −1 −1<br>1 −1 1 −1 −1 −1 1 −1 −1 −1 1 1 1 −1<br>−1 −1 −1 1 1 −1 −1 1 1 −1 1 1 −1 1<br>1 1 −1 1 −1 1 −1 1 −1 −1 1 −1 −1 1<br>1 −1 −1 −1 −1 −1 −1 −1 1 −1 −1 1 −1 1 |

(continued)

| Sequence type | Length of a sequence | Specific sequence |
|---|---|---|
| Ipatov sequence | 133 | −1 −1 1 0 −1 −1 0 0 −1 −1 −1 −1 1 0 −1<br>1 −1 −1 1 −1 −1 1 1 −1 1 −1 −1 1 −1<br>1 −1 −1 1 −1 1 1 1 1 1 −1 −1 0 1<br>0 −1 −1 1 1 1 −1 −1 −1 −1 1 −1 1 0<br>1 1 1 1 1 −1 1 −1 1 1 −1 1 −1 1<br>−1 0 −1 1 −1 −1 1 1 −1 −1 1 −1 −1 1<br>1 1 −1 −1 −1 1 −1 −1 1 1 0 −1 1 −1<br>−1 −1 −1 −1 −1 −1 −1 −1 1 1 −1 −1 1 1<br>1 0 1 −1 −1 −1 0 −1 1 1 1 −1 1 −1<br>1 0 1 1 −1 −1 |

Table 5b

| Sequence type | Length of a sequence | Specific sequence |
|---|---|---|
| Ding-H-M | 106 | 1 −1 −1 1 1 −1 1 1 −1 1 1 1 −1 −1 −1<br>−1 1 1 −1 1 −1 −1 −1 −1 1 1 −1 −1 1<br>1 −1 1 −1 −1 −1 1 1 1 1 1 1 1 1<br>1 1 1 1 −1 −1 −1 −1 −1 1 1 1 1 −1<br>1 −1 1 1 −1 1 −1 1 −1 1 −1 1 −1 1<br>−1 −1 1 −1 −1 −1 −1 1 1 −1 −1 1 1 −1<br>1 −1 −1 −1 −1 1 1 −1 1 −1 −1 1 −1 −1<br>−1 1 1 1 −1 −1 1 |
| Ipatov sequence (repeat 16 times) | 114 | 0 1 0 −1 0 1 0 1 0 1 0 1 0 1 0<br>−1 0 −1 0 −1 0 0 0 1 0 0 0 1 0<br>−1 0 −1 0 1 0 1 0 −1 0 1 0 1 0<br>−1 0 −1 0 0 0 −1 0 −1 0 −1 0 1 0<br>0 0 1 0 −1 0 0 0 0 0 −1 0 −1 0<br>1 0 −1 0 1 0 0 0 −1 0 1 0 −1 0<br>1 0 −1 0 −1 0 −1 0 −1 0 1 0 −1 0<br>−1 0 −1 0 1 0 −1 0 −1 0 −1 0 0 0 |

(continued)

| Sequence type | Length of a sequence | Specific sequence |
|---|---|---|
| Ipatov sequence (a quantity of repetitions is greater than 16) | 114 | −1 0 0 0 −1 0 −1 0 −1 0 1 0 −1 0 −1<br>0 −1 0 1 0 1 0 0 0 −1 0 −1 0 1<br>0 −1 0 −1 0 1 0 −1 0 1 0 1 0 −1<br>0 1 0 −1 0 1 0 1 0 −1 0 −1 0 −1<br>0 0 0 −1 0 1 0 0 0 1 0 −1 0 −1<br>0 −1 0 1 0 1 0 1 0 1 0 1 0 1<br>0 0 0 −1 0 1 0 −1 0 −1 0 −1 0 1<br>0 −1 0 0 0 0 0 −1 0 −1 0 1 0 0<br>0 |
| Ipatov sequence | 121 | 0 1 −1 −1 0 0 −1 0 0 0 1 −1 −1 1 0<br>1 0 0 1 −1 0 1 −1 1 0 1 −1 0 −1<br>−1 0 0 1 0 1 0 1 1 1 0 1 0 −1<br>1 0 0 1 1 0 −1 −1 1 −1 0 1 1 1<br>1 1 −1 −1 1 1 1 −1 0 1 0 1 −1 1<br>−1 1 0 0 −1 1 −1 −1 −1 −1 0 1 0 −1 |
| | | −1 0 −1 1 1 1 0 0 0 0 1 0 −1 0<br>0 1 1 1 −1 1 1 −1 1 −1 −1 0 −1 −1<br>1 0 0 0 1 1 −1 −1 |
| Ipatov sequence | 124 | 1 1 1 1 0 1 0 0 1 −1 1 −1 0 1 −1<br>−1 −1 1 1 −1 1 1 −1 1 0 −1 −1 −1 0<br>−1 −1 −1 1 1 −1 0 1 0 0 −1 −1 1 1<br>0 1 −1 1 1 1 1 1 −1 1 −1 −1 0 −1<br>−1 1 0 −1 −1 1 −1 1 −1 0 −1 0 0 1<br>1 1 1 0 −1 −1 1 −1 −1 1 1 1 −1 −1<br>−1 0 1 −1 1 0 1 −1 1 1 −1 −1 0 1<br>0 0 1 −1 −1 1 0 1 1 1 −1 1 −1 1<br>1 1 1 −1 0 −1 1 1 0 −1 1 |

(continued)

| Sequence type | Length of a sequence | Specific sequence |
|---|---|---|
| m-sequence | 127 | −1 1 1 1 1 1 1 −1 −1 1 −1 −1 −1 −1 −1 <br> 1 1 1 1 1 −1 1 −1 −1 1 1 1 1 −1 <br> 1 1 1 1 −1 −1 −1 1 −1 1 1 1 −1 −1 <br> 1 1 1 −1 1 1 −1 −1 −1 1 1 −1 1 −1 <br> 1 1 −1 −1 1 −1 1 1 −1 1 −1 −1 −1 −1 <br> 1 −1 1 −1 −1 −1 1 −1 −1 −1 1 1 1 −1 <br> −1 −1 −1 1 1 −1 −1 1 1 −1 1 1 −1 1 <br> 1 1 −1 1 −1 1 −1 1 −1 −1 1 −1 −1 1 <br> 1 −1 −1 −1 −1 −1 −1 −1 1 −1 −1 1 −1 1 |
| Ipatov sequence | 133 | −1 −1 1 0 −1 −1 0 0 −1 −1 −1 −1 1 0 −1 <br> 1 −1 −1 1 −1 −1 1 1 −1 1 −1 −1 1 −1 <br> 1 −1 −1 1 −1 1 1 1 1 1 −1 −1 0 1 <br> 0 −1 −1 1 1 1 −1 −1 −1 −1 1 −1 1 0 <br> 1 1 1 1 1 −1 1 −1 1 1 −1 1 −1 1 <br> −1 0 −1 1 −1 −1 1 1 −1 −1 1 −1 −1 1 <br> 1 1 −1 −1 −1 1 −1 −1 1 1 0 −1 1 −1 <br> −1 −1 −1 −1 −1 −1 −1 −1 1 1 −1 −1 1 1 <br> 1 0 1 −1 −1 −1 0 −1 1 1 1 −1 1 −1 <br> 1 0 1 1 −1 −1 |

To verify autocorrelation and cross-correlation performance of sequences in the sequence set designed in embodiments of this application, the following uses simulation results as an example for description.

It can be understood that at a transmit end, a spreading operation is performed on a sequence to generate a symbol, and the symbol is repeated a plurality of times before being sent. At the receive end, a plurality of repeated symbols are received, and a channel impulse response is calculated. Because the spreading operation is to fill one or more zero elements after each element in the sequence, the spreading operation does not affect performance of the sequence. Therefore, in embodiments of this application, autocorrelation and cross-correlation performance of the symbol generated based on the sequence are simulated to describe autocorrelation and cross-correlation performance of the sequence.

For example, the second communication apparatus locally pre-stores a sequence, and the sequence is a sequence determined by the second communication apparatus and the target device through negotiation in advance. The sequence is also a sequence in the sequence set designed in embodiments of this application. It is assumed that the sequence locally pre-stored by the second communication apparatus is the Legend sequence (the unit step sequence) with the length of 131 in Table 4, a spreading factor is 4, and a symbol si is obtained after spreading is performed on the sequence. The PPDU sent by the first communication apparatus includes a plurality of repeated symbols $s_2$. The symbol $s_2$ is generated by performing the spreading operation on the first sequence. The second communication apparatus performs spreading (assuming that the spreading factor is 4) on the locally pre-stored sequence to generate the symbol si, and then calculates a channel impulse response based on the symbol si and the received plurality of repeated symbols $s_2$. For example, for a specific calculation manner of the channel impulse response (CIR), refer to the foregoing FIG. 7. Details are not described herein again.

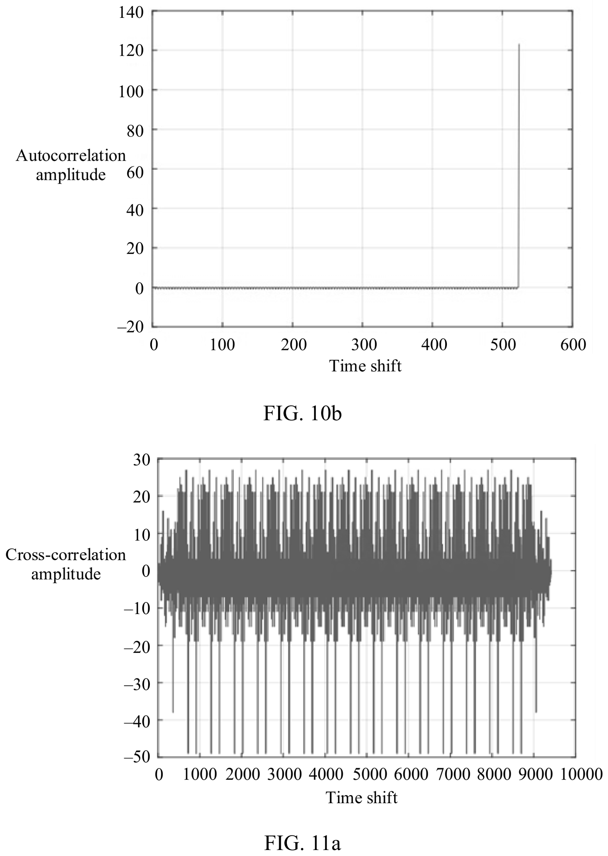

If the first communication apparatus is the target device, that is, the symbol $s_2$ received by the second communication apparatus is from the target device, the symbol $s_1$ is the same as the symbol $s_2$. In other words, the first sequence is also the sequence locally pre-stored by the second communication apparatus, that is, the first sequence is the Legend sequence with the length of 131 in Table 4. FIG. 10a is a diagram of simulation of autocorrelation results according to this embodiment of this application. It is assumed that the symbol $s_2$ is repeated 16 times. Because the length of the first sequence is 131 and the spreading factor is 4, lengths of the symbol $s_1$ and the symbol $s_2$ are both 524. FIG. 10a shows the results of performing a correlation operation on the symbol si and each of the 16 symbols $s_2$. Then, the autocorrelation results of the symbol $s_1$ and the 16 symbols $s_2$ are accumulated at a periodicity of the length (524 bits) of the symbol $s_1$ and then finally obtained results are averaged, to obtain a CIR shown in FIG. 10b.

It can be learned from FIG. 10b that an autocorrelation maximum side lobe amplitude of the symbol si (or the symbol $s_2$) is 0, and a ratio of an autocorrelation main lobe amplitude of the symbol $s_1$ (or the symbol $s_2$) to the autocorrelation maximum side lobe amplitude is infinite.

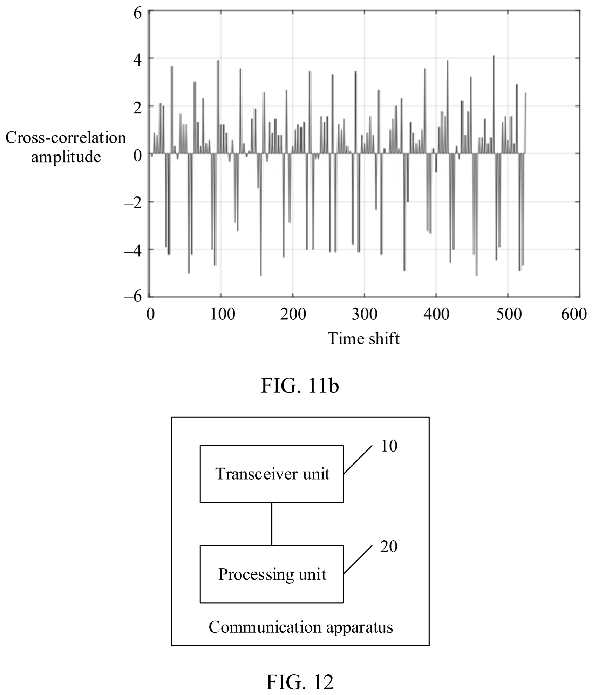

If the first communication apparatus is not the target device, that is, the symbol $s_2$ received by the second communication apparatus is not from the target device, to be specific, the first sequence is different from the sequence locally pre-stored by the second communication apparatus, it is assumed that the first sequence is the Legend sequence with the length of 139 in Table 4, and a spreading factor of the first sequence is also 4. For ease of description, it is assumed herein that the sequence locally pre-stored by the second communication apparatus is a second sequence. Because the first sequence is different from the second sequence, the symbol $s_1$ is different from the symbol $s_2$. FIG. 11a is a diagram of simulation of cross-correlation results according to this embodiment of this application. It is assumed that the symbol $s_2$ is repeated 16 times. Because the length of the second sequence is 131 and the spreading factor is 4, a length of the symbol $s_1$ is 524. FIG. 11a shows the results of performing a correlation operation on the symbol si and each of the 16 symbols $s_2$. Then, the cross-correlation results of the symbol $s_1$ and the 16 symbols $s_2$ are accumulated at a periodicity of the length (524 bits) of the symbol $s_1$ and then finally obtained results are averaged, to obtain a CIR shown in FIG. 11b. For example, in FIG. 11a, 524 amplitudes whose horizontal coordinates range from 0 to 523 are accumulated one by one with 524 amplitudes whose horizontal coordinates range from 524 to 1047, to obtain 524 amplitudes. Then, the 524 amplitudes are accumulated one by one with 524 amplitudes whose horizontal coordinates range from 1048 to 1571. The rest may be deduced by analogy. A total of 524 amplitudes are obtained through 15 accumulations, and then are averaged (that is, divided by 16), to obtain the CIR with a length of 524 shown in FIG. 11b.

As shown in FIG. 11b, after a plurality of accumulations are performed and then averaging is performed, a maximum absolute value of a cross-correlation amplitude is 5. As shown in Table 4, an autocorrelation main lobe amplitude of the symbol $s_1$ corresponding to the Legend sequence with the length of 131 is approximately 125. In this case, $20*\log10(5/125)=-27.95$ dB.

It may be understood that in FIG. 10a and FIG. 10b, the horizontal coordinate represents a time shift, and a vertical coordinate represents an autocorrelation amplitude. In FIG. 10a and FIG. 10b, the horizontal coordinate may also be understood as an element, a bit, or the like. In FIG. 11a and FIG. 11b, the horizontal coordinate represents a time shift, and a vertical coordinate indicates a cross-correlation amplitude. In FIG. 11a and FIG. 11b, the horizontal coordinate may also be understood as an element, a bit, or the like.

It may be further understood that FIG. 11a and FIG. 11b merely show the cross-correlation results between the symbols corresponding to the Legend sequence with the length of 131 and the Legend sequence with the length of 139 in Table 4. To better illustrate that the sequences in the sequence set in embodiments of this application have good cross-correlation performance, the following provides test results, in a unit of dB, of each sequence shown in Table 4 and Table 5a when a spreading factor is 4. The following Table 6a, Table 6b, and Table 6c show ratios of maximum absolute values of amplitudes to an autocorrelation main lobe amplitude of one symbol corresponding to another sequence (for example, a second sequence), where the amplitudes are obtained after cross-correlation results between 16 repeated symbols corresponding to a sequence (for example, a first sequence) in Table 4 and Table 5a and the symbol corresponding to the another sequence (for example, the second sequence) in Table 4 and Table 5a are accumulated at a periodicity of a length of the symbol corresponding to the another sequence (for example, the second sequence) and then finally obtained results are averaged. The ratio is less than -20 dB. In other words, when the sequence set designed in embodiments of this application is used, if the received sequence is not from the target device at the receive end, the length of the received sequence is different from the length of the sequence locally pre-stored by the receive end. After accumulations are performed and then averaging is performed, the cross-correlation result between the received sequence and the sequence locally pre-stored by the receiver cannot be increased, and the maximum absolute value of the amplitude obtained after accumulations are performed and then averaging is performed is significantly reduced. Therefore, the receive end can more easily determine whether the received sequence (or symbol) is interference.

It may be understood that in the following Table 6a, Table 6b, and Table 6c, "Ipatov 114" indicates the Ipatov sequence with the length of 114 in a case of 16 cross-correlation accumulations in Table 5a. "Ipatov 121" indicates the Ipatov sequence with the length of 121 in Table 5a. "Ipatov 124" indicates the Ipatov sequence with the length of 124 in Table 5a. "Ipatov 133" indicates the Ipatov sequence with the length of 133 in Table 5a. "m 127" indicates the m sequence with the length of 127 in Table 5a. "Legend 131" indicates the Legend sequence with the length of 131 in Table 4. "Legend 139" indicates the Legend sequence with the length of 139 in Table 4. "Two-Prime 143" indicates the Two-Prime sequence with the length of 143 in Table 4. "Legend 151" indicates the Legend sequence with the length of 151 in Table 4. "Ding-H-M 106" indicates the Ding-H-M sequence with the length of 106 in Table 5a. "Sidelnikov 112" indicates the Sidelnikov sequence with the length of 112 in Table 4. "Sidelnikov 120" indicates the Sidelnikov sequence with the length of 120 in Table 4. "Sidelnikov 126" indicates the Sidelnikov sequence with the length of 126 in Table 4. "Sidelnikov 130" indicates the Sidelnikov sequence with the length of 130 in Table 4. "Sidelnikov 136" indicates the Sidelnikov sequence with the length of 136 in Table 4. "Sidelnikov 138" indicates the Sidelnikov sequence with the length of 138 in Table 4. "Sidelnikov 148" indicates the Sidelnikov sequence with the length of 148 in Table 4. "Sidelnikov 156" indicates the Sidelnikov sequence with the length of 156 in Table 4. "Sidelnikov 162" indicates the Sidelnikov sequence with the length of 162 in Table 4.

It may be further understood that when a CFO is equal to 0, absolute values of periodic autocorrelation maximum side lobe amplitudes of Ipatov 114, Ipatov 121, Ipatov 124, and Ipatov 133 are all equal to 0. When a CFO is equal to 0, absolute values of periodic autocorrelation maximum side lobe amplitudes of m 127, Legend 131, Legend 139, Two-Prime 143, and Legend 151 are all equal to 1. When a CFO is equal to 0, absolute values of periodic autocorrelation maximum side lobe amplitudes of Ding-H-M 106, Sidelnikov 112, Sidelnikov 120, Sidelnikov 126, Sidelnikov 130, Sidelnikov 136, Sidelnikov 138, Sidelnikov 148, Sidelnikov 156, and Sidelnikov 162 are all equal to 2.

Table 6a

| Sequence type sequence type | Ipatov 114 | Ipatov 121 | Ipatov 124 | Ipatov 133 |
|---|---|---|---|---|
| Ipatov 114 | | -22.92 | -23.91 | -20.86 |
| Ipatov 121 | -27.44 | | -23.46 | -22.52 |
| Ipatov 124 | -29.93 | -24.62 | | -24.62 |
| Ipatov 133 | -26.65 | -26.56 | -26.46 | |
| m 127 | -29.77 | -29.13 | -26.79 | -26.07 |
| Legend 131 | -30.86 | -27.74 | -27.64 | -25.29 |
| Legend 139 | -29.44 | -27.12 | -26.11 | -26.69 |
| Two-Prime 143 | -30.80 | -24.39 | -26.77 | -26.68 |
| Legend 151 | -29.71 | -29.18 | -28.02 | -28.58 |
| Ding-H-M 106 | -30.44 | -28.33 | -26.53 | -27.44 |
| Sidelnikov 112 | -31.26 | -26.69 | -25.33 | -25.60 |
| Sidelnikov 120 | -28.64 | -27.60 | -25.16 | -26.68 |
| Sidelnikov 126 | -29.70 | -27.81 | -27.50 | -25.75 |
| Sidelnikov 130 | -29.21 | -26.90 | -26.99 | -27.57 |
| Sidelnikov 136 | -31.48 | -27.29 | -27.96 | -27.20 |
| Sidelnikov 138 | -32.07 | -28.19 | -29.38 | -25.67 |
| Sidelnikov 148 | -31.23 | -28.40 | -27.15 | -28.90 |
| Sidelnikov 156 | -32.53 | -28.86 | -27.60 | -27.36 |
| Sidelnikov 162 | -30.89 | -29.28 | -28.63 | -26.27 |
| CFO=40 ppm, autocorrelation peak to max side lobe ratio (peak to max side lobe ratio) | 16.7 | 20.0 | 18.7 | 19.4 |

Table 6b

| Sequence type sequence type | m 127 | Legend 131 | Legend 139 | Two-Prime 143 | Legend 151 |
|---|---|---|---|---|---|
| Ipatov 114 | -22.32 | -23.24 | -21.76 | -20.98 | -22.32 |
| Ipatov 121 | -26.13 | -22.98 | -22.08 | -21.27 | -22.98 |
| Ipatov 124 | -25.00 | -25.39 | -23.41 | -24.26 | -26.24 |

(continued)

| Sequence type sequence type | m 127 | Legend 131 | Legend 139 | Two-Prime 143 | Legend 151 |
|---|---|---|---|---|---|
| Ipatov 133 | -25.40 | -23.46 | -26.28 | -25.07 | -26.28 |
| m 127 | | -25.49 | -25.82 | -27.27 | -26.16 |
| Legend 131 | -26.09 | | -27.34 | -25.14 | -26.43 |
| Legend 139 | -25.96 | -27.67 | | -25.65 | -26.44 |
| Two-Prime 143 | -27.54 | -27.36 | -25.90 | | -27.54 |
| Legend 151 | -28.20 | -27.49 | -26.83 | -27.66 | |
| Ding-H-M 106 | -26.10 | -26.97 | -27.20 | -26.75 | -25.31 |
| Sidelnikov 112 | -23.34 | -26.38 | -25.42 | -25.07 | -25.98 |
| Sidelnikov 120 | -25.49 | -25.33 | -26.78 | -26.20 | -25.16 |
| Sidelnikov 126 | -26.44 | -26.63 | -26.44 | -25.42 | -26.63 |
| Sidelnikov 130 | -26.19 | -27.88 | -27.09 | -20.70 | -24.78 |
| Sidelnikov 136 | -26.08 | -25.93 | -24.75 | -23.96 | -26.58 |
| Sidelnikov 138 | -26.71 | -27.06 | -25.30 | -25.01 | -25.30 |
| Sidelnikov 148 | -24.20 | -27.66 | -26.66 | -25.90 | -27.66 |
| Sidelnikov 156 | -25.27 | -27.12 | -24.90 | -23.54 | -26.08 |
| Sidelnikov 162 | -28.10 | -24.99 | -25.11 | -27.60 | -27.60 |
| CFO=40 ppm, autocorrelation peak to max side lobe ratio (peak to max side lobe ratio) | 20.6 | 14.8 | 16.4 | 15.4 | 16.5 |

Table 6c

| Sequence type sequence type | Ding-H-M 106 | Sidelnikov 112 | Sidelnikov 120 | **Sidelnikov 126** | Sidelnikov 130 | Sidelnikov 136 | **Sidelnikov 138** | Sidelnikov 148 | Sidelnikov 156 | Sidelnikov 162 |
|---|---|---|---|---|---|---|---|---|---|---|
| Ipatov 114 | -23.24 | -23.57 | -22.32 | -20.98 | -22.62 | -22.62 | -22.32 | -21.24 | -21.50 | -22.92 |
| Ipatov 121 | -25.11 | -24.19 | -23.56 | -24.19 | -22.61 | -22.98 | -23.17 | -25.11 | -24.64 | -23.77 |
| Ipatov 124 | -26.24 | -24.26 | -24.08 | -26.02 | -25.19 | -23.58 | -26.70 | -24.44 | -25.00 | -24.26 |
| Ipatov 133 | -28.12 | -29.35 | -26.46 | -25.07 | -27.05 | -26.65 | -25.07 | -25.57 | -26.65 | -24.60 |
| m 127 | -25.99 | -25.17 | -25.49 | -25.82 | -25.99 | -25.99 | -26.88 | -25.17 | -24.87 | -25.33 |
| Legend 131 | -27.34 | -28.15 | -24.56 | -26.26 | -28.15 | -26.97 | -26.43 | -27.34 | -27.15 | -23.76 |
| Legend 139 | -26.94 | -25.36 | -27.30 | -26.44 | -27.12 | -25.36 | -25.65 | -25.80 | -25.36 | -25.07 |
| Two-Prime 143 | -27.36 | -26.36 | -27.19 | -26.52 | -21.08 | -24.39 | -25.04 | -24.39 | -23.78 | -27.02 |
| Legend 151 | -28.39 | -27.49 | -25.65 | -26.52 | -25.93 | -26.08 | -26.52 | -28.02 | -25.52 | -26.83 |
| Ding-H-M 106 | | -25.90 | -24.76 | -25.31 | -26.31 | -26.53 | -27.44 | -23.76 | -25.13 | -24.25 |
| Sidelnikov 112 | -25.98 | | -24.89 | -22.40 | -24.40 | -26.18 | -26.58 | -26.58 | -27.00 | -24.40 |
| Sidelnikov 120 | -25.33 | -24.84 | | -26.20 | -25.16 | -23.94 | -24.68 | -25.84 | -24.68 | -27.60 |

(continued)

| Sequence type sequence type | Ding-H-M 106 | Sidelni kov 112 | Sidelni kov 120 | **Sidelni** kov 126 | Sidelni kov 130 | Sidelni kov 136 | **Sidelni** kov 138 | Sidelni kov 148 | Sidelni kov 156 | Sidelni kov 162 |
|---|---|---|---|---|---|---|---|---|---|---|
| Sidelnikov 126 | -26.44 | -22.92 | -27.40 | | -25.92 | -25.58 | -26.44 | -25.42 | -27.20 | -23.17 |
| Sidelnikov 130 | -26.90 | -25.22 | -25.53 | -26.02 | | -27.67 | -26.19 | -24.49 | -21.86 | -25.38 |
| Sidelnikov 136 | -25.77 | -25.93 | -25.17 | -25.32 | -27.86 | | -26.58 | -26.41 | -26.25 | -25.03 |
| Sidelnikov 138 | -28.19 | -27.60 | -27.60 | -26.88 | -26.21 | -26.54 | | -25.44 | -27.06 | -26.05 |
| Sidelnikov 148 | -26.98 | -28.21 | -26.66 | -27.84 | -25.62 | -27.84 | -25.76 | | -26.20 | -26.50 |
| Sidelnikov 156 | -28.48 | -23.97 | -24.90 | -29.46 | -22.28 | -26.96 | -25.53 | -26.36 | | -25.53 |
| Sidelnikov 162 | -25.35 | -25.60 | -28.63 | -23.66 | -26.69 | -25.99 | -27.44 | -27.13 | -25.23 | |
| CFO=40 ppm, autocorrelat ion peak to max side lobe ratio (peak to max side lobe ratio) | 15.8 | 15.9 | 18.7 | 17.0 | 17.2 | 15.1 | 15.8 | 17.2 | 15.5 | 14.6 |

The foregoing content describes in detail the method provided in this application. To facilitate implementation of the foregoing solutions in embodiments of this application, embodiments of this application further provide a corresponding apparatus or device.

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, division into the modules is an example, and is merely a logical function division. In actual implementation, another division manner may be used. The following describes in detail communication apparatuses in embodiments of this application with reference to FIG. 12 to FIG. 14.

FIG. 12 is a diagram of a structure of a communication apparatus according to an embodiment of this application. As shown in FIG. 12, the communication apparatus includes a transceiver unit 10 and a processing unit 20. The transceiver unit 10 may implement a corresponding communication function, and the processing unit 20 is configured to perform data processing. For example, the transceiver unit 10 may also be referred to as a communication interface or a communication unit.

In some embodiments of this application, the communication apparatus may be the first communication apparatus shown above. To be specific, the communication apparatus shown in FIG. 12 may be configured to perform steps, functions, or the like performed by the first communication apparatus in the foregoing method embodiments. For example, the communication apparatus may be the first communication apparatus or a chip, a functional module, or the like configured in the first communication apparatus. This is not limited in embodiments of this application. The transceiver unit 10 is configured to perform a receiving/sending-related operation of the first communication apparatus in the foregoing method embodiments, and the processing unit 20 is configured to perform a processing-related operation of the first communication apparatus in the foregoing method embodiments.

For example, the processing unit 20 is configured to generate a PPDU, where the PPDU includes a first sequence, and the first sequence is any sequence shown in Table 3a, Table 3b, Table 4, Table 5a, or Table 5b. The transceiver unit 10 is configured to send or output the PPDU.

It may be understood that the transceiver unit 10 may send the PPDU to another communication apparatus, or the transceiver unit 10 outputs the PPDU from the processing unit 20 to another component or another functional module in the communication apparatus. Related descriptions of outputting other information by the transceiver unit are similar. Details are not described below again.

It may be understood that for specific descriptions of the PPDU, the first sequence, and the like, refer to the method embodiments shown above. Details are not described herein again.

For example, the processing unit 20 is configured to generate a PPDU, where the PPDU includes a first sequence, an absolute value of a periodic autocorrelation maximum side lobe amplitude of the first sequence is less than or equal to 2, the first sequence is any sequence in a sequence set, and a length of the first sequence is different from a length of another sequence in the sequence set. The transceiver unit is configured to send or output the PPDU.

It may be understood that for specific descriptions of the PPDU, the first sequence, the sequence set, and the like, refer to the method embodiments shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiment (as shown in FIG. 6). Details are not described herein again.

Still refer to FIG. 12. In some other embodiments of this application, the communication apparatus may be the second communication apparatus shown above. To be specific, the communication apparatus shown in FIG. 12 may be configured to perform steps, functions, or the like performed by the second communication apparatus in the foregoing method embodiments. For example, the communication apparatus may be the second communication apparatus or a chip, a functional module, or the like configured in the second communication apparatus. This is not limited in embodiments of this application. The transceiver unit 10 is configured to perform a receiving/sending-related operation of the second communication apparatus in the foregoing method embodiments, and the processing unit 20 is configured to perform a processing-related operation of the second communication apparatus in the foregoing method embodiments.

For example, the transceiver unit 10 is configured to receive or input a PPDU, where the PPDU includes a first sequence, and the first sequence is any sequence shown in Table 3a, Table 3b, Table 4, Table 5a, or Table 5b. The processing unit 20 is configured to process the PPDU.

It may be understood that the transceiver unit 10 may receive the PPDU from another communication apparatus, or the transceiver unit 10 inputs the PPDU from another component or another functional module in the second communication apparatus. Related descriptions of inputting other information by the transceiver unit are similar. Details are not described below again.

It may be understood that for specific descriptions of the PPDU, the first sequence, and the like, refer to the method embodiments shown above. Details are not described herein again.

For example, the transceiver unit 10 is configured to receive or input a PPDU, where the PPDU includes a first sequence, an absolute value of a periodic autocorrelation maximum side lobe amplitude of the first sequence is less than or equal to 2, the first sequence is any sequence in a sequence set, and a length of the first sequence is different from a length of another sequence in the sequence set. The processing unit 20 is configured to process the PPDU.

It may be understood that for specific descriptions of the PPDU, the first sequence, the sequence set, and the like, refer to the method embodiments shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiment (as shown in FIG. 6). Details are not described herein again.

The foregoing describes the communication apparatus in embodiments of this application. The following describes a possible product form of the communication apparatus. It should be understood that a product in any form that has a function of the communication apparatus in FIG. 12 falls within the protection scope of embodiments of this application. It should be further understood that the following descriptions are merely examples, and do not limit the product form of the communication apparatus in embodiments of this application.

In a possible implementation, in the communication apparatus shown in FIG. 12, the processing unit 20 may be one or more processors, and the transceiver unit 10 may be a transceiver, or the transceiver unit 10 may be a sending unit and a receiving unit. The sending unit may be a transmitter, and the receiving unit may be a receiver. The sending unit and the receiving unit are integrated into one component, for example, a transceiver. In embodiments of this application, the processor and the transceiver may be coupled or the like. A manner of connection between the processor and the transceiver is not limited in embodiments of this application. In a process of performing the foregoing method, a process of sending information (for example, sending a PPDU) in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information (for example, receiving a PPDU) in the foregoing method may be understood as a process of receiving the input information by the processor. When the processor receives the input information, the transceiver receives the information, and inputs the information into the processor. Further, after the transceiver receives the information, other processing may need to be performed on the information before processed information is input into the processor.

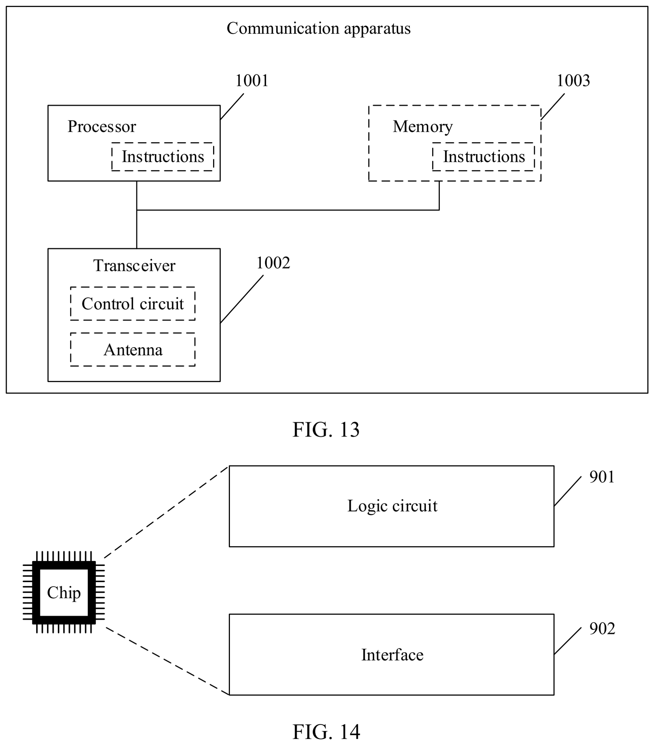

FIG. 13 is a diagram of another structure of a communication apparatus according to an embodiment of this application. The communication apparatus may be a first communication apparatus, a second communication apparatus, or a chip in the first communication apparatus or the second communication apparatus. FIG. 13 shows only main components of the communication apparatus. In addition to a processor 1001, the communication apparatus may further include a transceiver 1002, a memory 1003, and an input/output apparatus (not shown in the figure).

The processor 1001 is mainly configured to process a communication protocol and communication data, control the communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, like a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to a radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the transceiver 1002, and the memory 1003 may be connected through a communication bus.

For example, when the communication apparatus is configured to perform the steps, methods, or functions performed by the first communication apparatus in the foregoing method embodiments, the processor 1001 may be configured to perform step S101 in FIG. 6, and/or configured to perform another process of the technology described in this specification; and the transceiver 1002 may be configured to perform step S102 in FIG. 6, and/or configured to perform another process of the technology described in this specification.

For example, when the communication apparatus is configured to perform the steps, methods, or functions performed by the second communication apparatus in the foregoing method embodiments, the processor 1001 may be configured to perform step S103 in FIG. 6, and/or configured to perform another process of the technology described in this specification; and the transceiver 1002 may be configured to receive a PPDU, and/or configured to perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions, the instructions may be a computer program, and the computer program is run on the processor 1001, to enable the communication apparatus to perform the methods described in the foregoing method embodiments. The computer program may be solidified in the processor 1001. In this case, the processor 1001 may be implemented by hardware.

In an implementation, the communication apparatus may include a circuit. The circuit may implement the sending, receiving, or communication function in the foregoing method embodiment. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in embodiments of this application may further have more components and the like than those shown in FIG. 13. This is not limited in embodiments of this application. The foregoing method performed by the processor and the transceiver is merely an example. For specific steps performed by the processor and the transceiver, refer to descriptions in the foregoing method embodiments.

In another possible implementation, in the communication apparatus shown in FIG. 12, the processing unit 20 may be one or more logic circuits, and the transceiver unit 10 may be an input/output interface, or may be referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 14 is a diagram of still another structure of a communication apparatus according to an embodiment of this application. As shown in FIG. 14, the communication apparatus shown in FIG. 14 includes a logic circuit 901 and an interface 902. That is, the processing unit 20 may be implemented via the logic circuit 901, and the transceiver unit 10 may be implemented via the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 14 shows an example in which the communication apparatus is a chip, and the chip includes the logic circuit 901 and the interface 902.

In this embodiment of this application, the logic circuit and the interface may be coupled to each other. A specific manner of connection between the logic circuit and the interface is not limited in embodiments of this application.

For example, when the communication apparatus is configured to perform the method, the function, or the step performed by the first communication apparatus in the foregoing embodiments, the logic circuit 901 is configured to generate a PPDU, where the PPDU includes a first sequence; and the interface 902 is configured to output the PPDU.

For example, when the communication apparatus is configured to perform the method, the function, or the step performed by the first communication apparatus in the foregoing embodiments, the interface 902 is configured to input a PPDU, where the PPDU includes a first sequence; and the logic circuit 901 is configured to process the PPDU.

It may be understood that for specific descriptions of the PPDU, the first sequence, the sequence set, and the like, refer to the method embodiments shown above. Details are not described herein again.

It may be understood that the communication apparatus shown in embodiments of this application may implement the methods provided in embodiments of this application in a form of hardware, or may implement the methods provided in embodiments of this application in a form of software. This is not limited in embodiments of this application.

For specific implementations of the embodiment shown in FIG. 14, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing method embodiments.

In addition, this application further provides a computer program. The computer program is configured to implement operations and/or processing performed by the first communication apparatus in the methods provided in this application.

This application further provides a computer program. The computer program is configured to implement operations and/or processing performed by the second communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the methods provided in this application.

This application further provides a computer-readable storage medium. The computer-readable storage medium stores computer code. When the computer code is run on a computer, the computer is enabled to perform operations and/or processing performed by the second communication apparatus in the methods provided in this application.

This application further provides a computer program product. The computer program product includes computer code or a computer program. When the computer code or the computer program is run on a computer, an operation and/or processing performed by the first communication apparatus in the methods provided in this application are/is performed.

This application further provides a computer program product. The computer program product includes computer code or a computer program. When the computer code or the computer program is run on a computer, an operation and/or processing performed by the second communication apparatus in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An ultra-wideband-based physical layer protocol data unit PPDU transmission method, comprising:

   generating, by a communication apparatus, a physical layer protocol data unit PPDU, wherein the PPDU comprises a first sequence, and the first sequence is any sequence shown in Table 3a, Table 3b, Table 4, Table 5a, or Table 5b; and
   sending, by the communication apparatus, the PPDU.

2. An ultra-wideband-based physical layer protocol data unit PPDU transmission method, comprising:

   receiving, by a communication apparatus, a physical layer protocol data unit PPDU, wherein the PPDU comprises a first sequence, and the first sequence is any sequence shown in Table 3a, Table 3b, Table 4, Table 5a, or Table 5b; and
   processing, by the communication apparatus, the PPDU.

3. The method according to claim 1 or 2, wherein the first sequence is any sequence in a sequence set, and sequences in the sequence set have different lengths.

4. The method according to claim 3, wherein a ratio of a maximum absolute value of an amplitude to an autocorrelation main lobe amplitude of one symbol corresponding to a second sequence is less than or equal to a second preset threshold, the amplitude is obtained after cross-correlation results between a plurality of repeated symbols corresponding to the first sequence and the symbol corresponding to the second sequence in the sequence set are accumulated at a periodicity of a length of the symbol corresponding to the second sequence and then finally obtained results are averaged, and the second sequence is any sequence other than the first sequence in the sequence set.

5. The method according to any one of claims 1 to 4, wherein an absolute value of a periodic autocorrelation maximum side lobe amplitude of the first sequence is less than or equal to 2.

6. The method according to any one of claims 1 to 5, wherein a ratio of an autocorrelation main lobe amplitude of the first sequence to an autocorrelation maximum side lobe amplitude is greater than or equal to a first preset threshold.

7. The method according to any one of claims 1 to 6, wherein a length of the first sequence is any integer bit from 56 to 81 or from 106 to 162.

8. An ultra-wideband-based physical layer protocol data unit PPDU transmission method, comprising:

   generating, by a communication apparatus, a physical layer protocol data unit PPDU, wherein the PPDU comprises a first sequence, an absolute value of a periodic autocorrelation maximum side lobe amplitude of the first sequence is less than or equal to 2, the first sequence is any sequence in a sequence set, and a length of the first sequence is different from a length of another sequence in the sequence set; and
   sending, by the communication apparatus, the PPDU.

9. An ultra-wideband-based physical layer protocol data unit PPDU transmission method, comprising:

   receiving, by a communication apparatus, a physical layer protocol data unit PPDU, wherein the PPDU comprises a first sequence, an absolute value of a periodic autocorrelation maximum side lobe amplitude of the first sequence is less than or equal to 2, the first sequence is any sequence in the sequence set, and a length of the first sequence is different from a length of another sequence in the sequence set; and
   processing, by the communication apparatus, the PPDU.

10. The method according to claim 8 or 9, wherein the absolute value of the periodic autocorrelation maximum side lobe amplitude of the first sequence is equal to any one of the following values: 0, 1, or 2.

11. The method according to any one of claims 8 to 10, wherein a ratio of an autocorrelation main lobe amplitude of the first sequence to an autocorrelation maximum side lobe amplitude is greater than or equal to a first preset threshold.

12. The method according to claim 11, wherein the first preset threshold is 35 dB.

13. The method according to any one of claims 8 to 12, wherein a ratio of a maximum absolute value of an amplitude to an autocorrelation main lobe amplitude of one symbol corresponding to a second sequence is less than or equal to a second preset threshold, the amplitude is obtained after cross-correlation results between a plurality of repeated symbols corresponding to the first sequence and the symbol corresponding to the second sequence in the sequence set are accumulated at a periodicity of a length of the symbol corresponding to the second sequence and then finally obtained results are averaged, and the second sequence is any sequence other than the first sequence in the sequence set.

14. The method according to claim 13, wherein the second preset threshold is -20 dB.

15. The method according to any one of claims 8 to 14, wherein sequences in the sequence set have different lengths.

16. The method according to any one of claims 8 to 15, wherein the length of the first sequence is any integer bit from 56 to 81 or from 106 to 162.

17. The method according to any one of claims 8 to 16, wherein a spreading factor of the first sequence is 4 or 8; and when the spreading factor of the first sequence is 4, the length of the first sequence is any integer bit from 106 to 162; or when the spreading factor of the first sequence is 8, the length of the first sequence is any integer bit from 56 to 81.

18. The method according to any one of claims 8 to 17, wherein the first sequence is a binary sequence or a ternary sequence.

19. The method according to any one of claims 8 to 18, wherein the first sequence is any one of the following sequences:

| Length of a sequence | Specific sequence |
|---|---|
| 57 | 1 −1 1 −1 0 0 −1 0 −1 −1 −1 −1 1 1 1 −1 −1 0 −1 −1 −1 1 1 1 −1 −1 1 −1 1 −1 −1 −1 −1 −1 1 −1 0 1 −1 1 0 1 1 1 −1 1 1 0 −1 1 −1 −1 1 1 −1 −1 0 |
| 63 | 0 0 0 0 1 −1 −1 0 −1 0 0 0 −1 1 0 0 0 1 0 0 −1 0 1 1 0 0 0 0 0 0 1 0 0 0 0 0 −1 0 0 0 1 0 1 0 0 1 0 0 0 0 0 0 0 0 0 0 1 0 0 0 0 0 0 |
| 106 | 1 −1 −1 1 1 −1 1 1 −1 1 1 1 −1 −1 −1 −1 1 1 −1 1 −1 −1 −1 −1 1 1 −1 −1 1 1 −1 1 −1 −1 −1 1 1 1 1 1 1 1 1 1 1 1 1 −1 −1 −1 −1 −1 1 1 1 1 −1 1 −1 1 1 −1 1 −1 1 −1 1 −1 1 −1 1 −1 −1 1 −1 −1 −1 −1 1 1 −1 −1 1 1 −1 1 −1 −1 −1 −1 1 1 −1 1 −1 −1 1 −1 −1 −1 1 1 1 −1 −1 1 |
| 112 | 1 1 −1 1 1 1 1 1 1 1 1 1 −1 1 −1 −1 1 −1 −1 1 1 −1 1 −1 −1 1 −1 1 1 1 −1 −1 −1 1 −1 −1 1 1 −1 1 −1 −1 −1 1 1 1 1 1 −1 1 1 −1 −1 −1 1 −1 1 1 1 1 −1 1 1 −1 −1 −1 1 −1 1 −1 −1 1 −1 −1 −1 −1 1 1 −1 −1 −1 1 −1 −1 1 −1 −1 −1 −1 1 1 1 1 −1 −1 1 1 1 −1 −1 −1 −1 1 −1 1 −1 1 −1 1 −1 −1 −1 |
| 114 | −1 0 0 0 −1 0 −1 0 −1 0 1 0 −1 0 −1 0 −1 0 1 0 1 0 0 0 −1 0 −1 0 1 0 −1 0 −1 0 1 0 −1 0 1 0 1 0 −1 0 1 0 −1 0 1 0 1 0 −1 0 −1 0 −1 0 0 0 −1 0 1 0 0 0 1 0 −1 0 −1 0 −1 0 1 0 1 0 1 0 1 0 1 0 1 0 0 0 −1 0 1 0 −1 0 −1 0 −1 0 1 0 −1 0 0 0 0 0 −1 0 −1 0 1 0 0 0 |

(continued)

| Length of a sequence | Specific sequence |
|---|---|
| 120 | 1 −1 −1 1 −1 −1 −1 1 −1 −1 −1 −1 1 −1 −1 1 −1 1<br>1 −1 1 1 −1 −1 1 1 1 1 1 1 −1 1 −1 1 −1<br>1 1 −1 1 −1 1 −1 1 −1 −1 1 1 −1 1 1 −1 1<br>1 −1 −1 −1 −1 1 1 1 1 −1 1 −1 −1 1 −1 1 1<br>−1 −1 −1 1 1 1 −1 −1 1 1 1 1 1 1 1 1 −1<br>−1 −1 −1 −1 −1 −1 1 −1 1 −1 1 1 −1 −1 1 1 1<br>−1 −1 −1 −1 1 1 1 −1 1 −1 −1 −1 1 −1 −1 −1 1 |
| 121 | 0 1 −1 −1 0 0 −1 0 0 0 1 −1 −1 1 0 1 0 0<br>1 −1 0 1 −1 1 0 1 −1 0 −1 −1 0 0 1 0 1<br>0 1 1 1 0 1 0 −1 1 0 0 1 1 0 −1 −1 1<br>−1 0 1 1 1 1 1 −1 −1 1 1 1 −1 0 1 0 1<br>−1 1 −1 1 0 0 −1 1 −1 −1 −1 −1 0 1 0 −1 −1<br>0 −1 1 1 1 0 0 0 0 1 0 −1 0 0 1 1 1<br>−1 1 1 −1 1 −1 −1 0 −1 −1 1 0 0 0 1 1 −1<br>−1 |
| 124 | 1 1 1 1 0 1 0 0 1 −1 1 −1 0 1 −1 −1 −1 1<br>1 −1 1 1 −1 1 0 −1 −1 −1 0 −1 −1 −1 1 1 −1<br>0 1 0 0 −1 −1 1 1 0 1 −1 1 1 1 1 1 −1<br>1 −1 −1 0 −1 −1 1 0 −1 −1 1 −1 1 −1 0 −1 0<br>0 1 1 1 1 0 −1 −1 1 −1 −1 1 1 1 −1 −1 −1<br>0 1 −1 1 0 1 −1 1 1 −1 −1 0 1 0 0 1 −1<br>−1 1 0 1 1 1 −1 1 −1 1 1 1 1 −1 0 −1 1<br>1 0 −1 1 |
| 126 | 1 1 −1 −1 1 1 −1 −1 −1 −1 1 −1 1 −1 −1 −1 1 1<br>−1 1 1 −1 1 1 −1 1 −1 1 1 −1 −1 1 −1 1 1<br>−1 1 1 1 1 −1 1 −1 1 −1 −1 1 1 1 1 1 1<br>1 1 −1 −1 1 −1 −1 −1 −1 1 −1 1 −1 −1 −1 1 −1<br>1 1 1 −1 −1 1 −1 1 −1 1 −1 1 1 −1 −1 −1 −1<br>−1 −1 1 −1 1 1 1 −1 −1 −1 −1 1 1 −1 −1 −1 −1<br>−1 1 1 1 −1 −1 −1 1 1 −1 1 1 1 1 1 −1 1<br>−1 −1 1 1 −1 −1 |

(continued)

| Length of a sequence | Specific sequence |
|---|---|
| 127 | –1 1 1 1 1 1 1 –1 –1 1 –1 –1 –1 –1 –1 1 1 1<br>1 1 –1 1 –1 –1 1 1 1 1 –1 1 1 1 1 –1 –1<br>–1 1 –1 1 1 1 –1 –1 1 1 1 –1 1 1 –1 –1 –1<br>1 1 –1 1 –1 1 1 –1 –1 1 –1 1 1 –1 1 –1 –1<br>–1 –1 1 –1 1 –1 –1 –1 1 –1 –1 –1 1 1 1 –1 –1<br>–1 –1 1 1 –1 –1 1 1 –1 1 1 –1 1 1 1 –1 1<br>–1 1 –1 1 –1 –1 1 –1 –1 1 1 –1 –1 –1 –1 –1 –1<br>–1 1 –1 –1 1 –1 1 |
| 130 | –1 1 1 1 –1 1 1 1 –1 –1 1 1 1 –1 –1 –1 –1 –1<br>–1 1 1 1 –1 –1 –1 –1 –1 1 –1 –1 1 1 –1 –1 –1<br>1 1 1 –1 1 –1 1 1 –1 1 –1 –1 1 1 1 1 –1<br>1 1 1 –1 1 –1 1 1 1 1 –1 1 –1 1 –1 –1 –1<br>–1 1 –1 1 1 1 1 1 –1 1 1 1 –1 1 –1 –1 1<br>1 1 1 –1 –1 –1 –1 –1 1 –1 –1 1 –1 –1 1 1 –1<br>–1 –1 1 –1 1 –1 –1 1 –1 –1 1 –1 1 –1 1 1 –1<br>1 1 –1 –1 1 –1 –1 –1 1 –1 |
| 131 | –1 1 –1 –1 –1 1 –1 1 –1 1 –1 –1 –1 1 –1 –1 1 1<br>1 –1 –1 1 1 1 –1 1 –1 –1 1 1 1 1 –1 –1 –1<br>–1 1 –1 –1 1 –1 1 –1 –1 –1 –1 1 –1 –1 1 1 –1<br>–1 1 –1 1 1 –1 –1 –1 –1 –1 –1 –1 –1 1 1 1 1<br>1 1 1 1 –1 –1 1 –1 1 1 –1 –1 1 1 –1 1 1<br>1 1 –1 1 –1 1 1 –1 1 1 1 1 –1 –1 –1 –1 1<br>1 –1 1 –1 –1 –1 1 1 –1 –1 –1 1 1 –1 1 1 1<br>–1 1 –1 1 –1 1 1 1 –1 1 1 |

| Length of a sequence | Specific sequence |
|---|---|
| 133 | −1 −1 1 0 −1 −1 0 0 −1 −1 −1 −1 1 0 −1 1 −1 −1<br>1 −1 −1 1 1 −1 1 −1 −1 1 −1 1 −1 −1 1 −1 1<br>1 1 1 1 −1 −1 0 1 0 −1 −1 1 1 1 −1 −1 −1<br>−1 1 −1 1 0 1 1 1 1 1 −1 1 −1 1 1 −1 1<br>−1 1 −1 0 −1 1 −1 −1 1 1 −1 −1 1 −1 −1 1 1<br>1 −1 −1 −1 1 −1 −1 1 1 0 −1 1 −1 −1 −1 −1 −1<br>−1 −1 −1 −1 1 1 −1 −1 1 1 1 0 1 −1 −1 −1 0<br>−1 1 1 1 −1 1 −1 1 0 1 1 −1 −1 |
| 136 | 1 1 −1 1 −1 1 −1 1 1 1 −1 1 1 −1 −1 1 −1 1<br>−1 −1 −1 −1 1 1 −1 1 −1 1 1 −1 1 1 1 −1 1<br>−1 −1 1 1 −1 1 1 1 1 1 −1 −1 −1 −1 1 −1 −1<br>1 −1 −1 1 1 1 1 1 1 −1 −1 −1 1 1 −1 1<br>1 1 −1 −1 1 −1 −1 1 −1 1 −1 1 −1 −1 1 1 1<br>−1 −1 −1 1 −1 1 1 −1 1 −1 1 1 1 −1 −1 1 1<br>1 1 −1 1 1 1 −1 −1 −1 −1 −1 1 1 −1 1 −1 −1<br>−1 −1 −1 1 1 −1 −1 −1 1 −1 −1 −1 −1 −1 −1 −1 |
| 138 | −1 −1 1 1 −1 −1 1 1 1 1 1 −1 1 1 1 −1 −1 −1<br>−1 1 1 −1 −1 −1 −1 −1 −1 1 1 −1 1 1 1 1 −1<br>1 −1 −1 −1 1 −1 1 1 1 1 1 −1 1 1 −1 −1 −1<br>1 1 1 1 −1 1 1 −1 1 1 −1 1 −1 −1 −1 −1 −1<br>1 −1 1 −1 1 −1 −1 −1 −1 1 1 1 −1 −1 −1 1 −1<br>1 1 −1 1 1 −1 −1 −1 1 −1 1 −1 −1 −1 −1 1 −1<br>−1 −1 −1 1 −1 1 1 1 −1 −1 1 −1 1 −1 1 1 −1<br>−1 1 −1 1 1 −1 1 1 1 −1 1 −1 1 1 −1 −1 1<br>1 |

(continued)

| Length of a sequence | Specific sequence |
|---|---|
| 139 | −1 1 1 −1 −1 −1 −1 1 −1 1 −1 1 −1 1 1 −1 1 1 1 −1 1 1 1 −1 −1 1 1 −1 −1 −1 −1 1 1 −1 −1 −1 −1 −1 1 1 −1 −1 1 −1 −1 1 −1 −1 −1 −1 1 −1 1 −1 −1 1 −1 −1 1 −1 1 1 1 1 1 −1 −1 −1 −1 −1 1 −1 1 −1 1 1 1 1 1 1 −1 −1 −1 −1 −1 1 −1 1 1 −1 1 1 −1 1 −1 1 1 1 1 −1 1 1 −1 −1 1 1 1 1 1 −1 −1 1 1 −1 −1 −1 1 −1 −1 −1 1 −1 −1 1 −1 1 −1 1 −1 1 1 1 1 1 −1 −1 1 1 |
| 143 | −1 −1 −1 −1 −1 1 −1 −1 −1 −1 1 1 −1 −1 −1 1 −1 1 −1 −1 1 −1 1 −1 −1 −1 −1 −1 −1 1 1 1 −1 1 1 1 −1 1 −1 −1 1 −1 −1 1 1 1 −1 1 −1 −1 −1 1 −1 −1 −1 1 −1 −1 1 1 1 1 1 −1 −1 −1 1 1 1 −1 1 1 −1 −1 1 −1 −1 1 −1 1 1 −1 −1 −1 −1 −1 1 1 1 1 1 −1 −1 1 1 1 −1 1 −1 1 −1 1 1 1 −1 −1 1 −1 1 −1 −1 1 1 −1 −1 −1 1 1 −1 1 1 1 1 1 −1 1 1 −1 1 −1 1 −1 1 −1 1 1 −1 1 1 1 1 −1 1 1 1 1 1 |
| 148 | −1 −1 1 1 1 1 −1 1 −1 −1 −1 1 −1 −1 1 −1 −1 1 1 1 1 1 1 −1 −1 1 −1 1 1 1 1 1 1 1 1 −1 −1 −1 −1 −1 1 1 1 −1 1 1 1 1 −1 −1 1 1 1 1 −1 −1 1 −1 −1 1 1 1 −1 −1 −1 1 −1 −1 −1 1 −1 −1 −1 −1 −1 1 1 −1 1 −1 1 1 1 −1 1 1 1 −1 1 1 −1 1 1 −1 1 1 −1 −1 −1 1 1 −1 1 −1 −1 1 1 −1 1 −1 −1 −1 1 −1 −1 1 −1 1 −1 −1 1 −1 1 −1 1 −1 −1 −1 −1 1 1 −1 1 −1 1 −1 −1 1 1 1 −1 −1 1 −1 −1 −1 −1 1 −1 1 1 |

(continued)

| Length of a sequence | Specific sequence |
|---|---|
| 151 | −1 −1 1 −1 −1 1 1 −1 −1 −1 −1 1 1 1 1 −1 −1 −1 −1 −1 −1 −1 1 1 −1 1 1 1 −1 1 −1 −1 1 −1 1 −1 −1 −1 −1 −1 1 −1 −1 −1 −1 1 −1 1 −1 −1 1 1 1 1 −1 1 1 −1 −1 1 1 −1 1 −1 1 1 1 −1 −1 1 1 −1 1 −1 1 −1 1 −1 1 −1 −1 1 1 −1 −1 −1 1 −1 1 −1 −1 1 1 −1 −1 1 −1 −1 −1 −1 1 1 −1 1 −1 1 1 1 1 −1 1 1 1 1 1 −1 1 −1 1 1 −1 1 −1 −1 −1 1 −1 −1 1 1 1 1 1 1 1 −1 −1 −1 −1 1 1 1 1 −1 −1 1 1 −1 1 1 1 |
| 156 | −1 −1 −1 1 −1 1 −1 −1 1 1 −1 1 −1 −1 1 −1 1 −1 −1 −1 −1 1 1 −1 −1 1 1 −1 1 1 −1 1 −1 −1 1 1 1 1 1 1 −1 1 −1 −1 −1 −1 −1 −1 1 1 1 −1 1 −1 1 −1 1 −1 −1 −1 1 −1 −1 1 1 1 −1 −1 1 −1 −1 1 1 −1 1 −1 −1 −1 1 1 −1 1 1 1 1 −1 −1 1 1 1 −1 −1 1 −1 −1 1 1 1 −1 1 1 1 1 1 1 1 1 −1 1 1 −1 1 −1 1 −1 −1 −1 −1 1 −1 1 −1 1 1 −1 −1 −1 −1 1 1 1 −1 −1 1 1 −1 −1 1 −1 1 1 1 1 1 −1 −1 −1 −1 1 1 −1 −1 −1 −1 −1 1 |
| 162 | −1 −1 −1 1 −1 1 1 −1 −1 1 1 1 1 1 1 1 −1 1 1 1 1 1 1 1 −1 −1 1 −1 −1 1 1 1 −1 1 −1 −1 1 1 −1 1 1 −1 −1 −1 1 1 1 −1 −1 −1 −1 1 −1 1 −1 1 1 −1 1 1 −1 −1 1 1 1 1 −1 1 −1 −1 −1 −1 −1 −1 1 −1 1 1 1 1 −1 −1 1 −1 1 1 −1 1 1 1 1 −1 1 −1 1 −1 −1 −1 −1 1 −1 1 1 −1 −1 1 1 1 1 −1 −1 −1 −1 −1 −1 1 −1 1 1 −1 1 1 −1 1 1 1 −1 −1 −1 −1 −1 −1 1 −1 1 1 −1 1 1 −1 1 1 −1 −1 −1 1 −1 1 −1 1 −1 −1 −1 1 −1 1 −1 1 −1 −1 1 1 −1 −1 −1 −1 1 |

**20.** An ultra-wideband-based physical layer protocol data unit PPDU transmission method, comprising:

sending, by a first communication apparatus, a first physical layer protocol data unit PPDU, wherein the first PPDU comprises a first sequence; and

receiving, by a second communication apparatus, a second PPDU, wherein the second PPDU comprises a second sequence, transmission time of the first PPDU overlaps transmission time of the second PPDU, and a length of the first sequence is different from a length of the second sequence.

21. The method according to claim 20, wherein the first sequence and the second sequence belong to a same sequence set, and the sequence set comprises one or more sequences in Table 3a, Table 3b, Table 4, Table 5a, or Table 5b.

22. A communication apparatus, comprising a unit or a module configured to perform the method according to any one of claims 1 to 19.

23. A communication apparatus, comprising:

one or more processors, wherein the one or more processors are coupled to one or more memories; and
the one or more memories are configured to store a computer program, and the one or more processors are configured to execute the computer program stored in the one or more memories, to enable the communication apparatus to perform the method according to any one of claims 1 to 19.

24. A communication apparatus, comprising a logic circuit and an interface, wherein the logic circuit is coupled to the interface; and
the interface is configured to input and/or output code instructions, and the logic circuit is configured to execute the code instructions, to enable the method according to any one of claims 1 to 19 to be executed.

25. A wireless communication system, comprising a communication apparatus configured to perform the method according to claim 1 or 8 and a communication apparatus configured to perform the method according to claim 2 or 9.

26. A readable storage medium, wherein the readable storage medium is configured to store a computer program, and when the computer program is executed by a processor, a communication apparatus comprising the processor is enabled to perform the method according to any one of claims 1 to 19.

PAN
coordinator

● Full-function device

○ Reduced-function device

FIG. 1

PAN
coordinator

● Full-function device

○ Reduced-function device

FIG. 2

| PPDU config 0 | SYNC | SFD | PHR | PHY payload | | |

| PPDU config 1 | SYNC | SFD | STS | PHR | PHY payload |

| PPDU config 2 | SYNC | SFD | PHR | PHY payload | STS |

| PPDU config 3 | SYNC | SFD | STS |

| PPDU config 4 | SYNC | SFD | SENS |

| PPDU config 5 | SYNC | SFD | SENS | PHR | PHY payload |

| PPDU config 6 | SYNC | SFD | PHR | PHY payload | SENS |

| PPDU config 7 | SYNC | SFD | PHR 1 | PHR 2 | PHY payload |

PPDU config 8

SYNC: synchronization     SFD: start-of-frame delimiter     PHR: physical layer header
SENS: sensing
STS: scrambled timestamp sequence     PHY payload: physical payload
PPDU: physical layer protocol data unit     config 0 to 8: configuration 0 to 8

FIG. 3

| $C_i(0)$ | $C_i(1)$ | ... | $C_i(K-1)$ |

Where K is the code
length 31, 91, or 127

| $C_i(0)$ | 0 | 0 | ... | 0 | $C_i(1)$ | 0 | 0 | ... | 0 | ... | $C_i(K-1)$ | 0 | 0 | ... | 0 |

L chips

Symbol $S_i$ of duration: $T_{psym}$

Chip: chip
Symbol $S_i$ of duration: $T_{psym}$: duration $T_{psym}$ of the symbol $S_i$
Where K is the code length 31, 91, or 127: where K is the code length of 31, 91, or 127

FIG. 4

FIG. 5

FIG. 6

Correlation
window

Move from left to right

s₁

| s₂ | s₂ | ... | s₂ |

(a) Diagram of calculating a CIR
when s₁ is the same as s₂

Correlation
window

Move from left to right

s₁

| s₂ | s₂ | ... | s₂ |

(b) Diagram of calculating a CIR
when s₁ is different from s₂

FIG. 7

FIG. 8a

FIG. 8b

FIG. 9a

FIG. 9b

FIG. 10a

FIG. 10b

FIG. 11a

FIG. 11b

FIG. 12

Communication apparatus

1001

Processor

Instructions

1003

Memory

Instructions

Transceiver

1002

Control circuit

Antenna

FIG. 13

Logic circuit

901

Interface

902

Chip

FIG. 14

## INTERNATIONAL SEARCH REPORT

| International application No. |
|---|
| **PCT/CN2024/103215** |

**A. CLASSIFICATION OF SUBJECT MATTER**

H04B1/719(2011.01)i

According to International Patent Classification (IPC) or to both national classification and IPC

**B. FIELDS SEARCHED**

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNTXT: VEN: ENTXTC; CNKI; IEEE: 物理层协议数据单元, 超宽带, 干扰, 自相关, 互相关, 主瓣, 旁瓣, 序列, 长度, 不同, 不相同, 接收, PPDU, UWB, interference, autocorrelation, cross-correlation, main lobe, side lobe, sequence, length, different, receive

**C. DOCUMENTS CONSIDERED TO BE RELEVANT**

| Category* | Citation of document, with indication, where appropriate, of the relevant passages | Relevant to claim No. |
|---|---|---|
| X | CN 115967413 A (HUAWEI TECHNOLOGIES CO., LTD.) 14 April 2023 (2023-04-14) description, paragraphs [0001]-[0384], and figures 1-11 | 20 |
| A | CN 115967413 A (HUAWEI TECHNOLOGIES CO., LTD.) 14 April 2023 (2023-04-14) description, paragraphs [0001]-[0384], and figures 1-11 | 1-19, 21-26 |
| A | CN 111669783 A (HUAWEI TECHNOLOGIES CO., LTD.) 15 September 2020 (2020-09-15) entire document | 1-26 |
| A | CN 116112118 A (HUAWEI TECHNOLOGIES CO., LTD.) 12 May 2023 (2023-05-12) entire document | 1-26 |
| A | US 2022231884 A1 (MORSE MICRO PTY. LTD.) 21 July 2022 (2022-07-21) entire document | 1-26 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 August 2024** | **26 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/103215**

| Patent document cited in search report | | | Publication date (day/month/year) | Patent family member(s) | | | Publication date (day/month/year) |
|---|---|---|---|---|---|---|---|
| CN | 115967413 | A | 14 April 2023 | None | | | |
| CN | 111669783 | A | 15 September 2020 | None | | | |
| CN | 116112118 | A | 12 May 2023 | None | | | |
| US | 2022231884 | A1 | 21 July 2022 | US | 11996957 | B2 | 28 May 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310840919